(19)

Europäisches Patentamt
European Patent Office
Office européen des brevets

(11) EP 0 540 340 B1

(12) **EUROPEAN PATENT SPECIFICATION**

(45) Date of publication and mention of the grant of the patent:
**28.08.1996 Bulletin 1996/35**

(51) Int. Cl.[6]: **B60C 11/12**, B60C 11/11, B29D 30/06

(21) Application number: **92309935.2**

(22) Date of filing: **29.10.1992**

# (54) Pneumatic tire, mold for manufacturing pneumatic tire, and method of manufacturing pneumatic tire using the mold

Luftreifen, Form und Verfahren zur Herstellung

Bandage pneumatique, moule de fabrication et procédé de fabrication

(84) Designated Contracting States:
**DE ES FR GB IT LU SE**

(30) Priority: **01.11.1991 JP 287689/91**
**01.11.1991 JP 288017/91**
**11.11.1991 JP 294338/91**
**11.11.1991 JP 294339/91**
**11.11.1991 JP 294341/91**
**04.06.1992 JP 144591/92**
**04.06.1992 JP 144614/92**

(43) Date of publication of application:
**05.05.1993 Bulletin 1993/18**

(73) Proprietor: **BRIDGESTONE CORPORATION**
**Tokyo 104 (JP)**

(72) Inventors:
- **Aoki, Namito**
  **Kobubunji-shi, Tokyo (JP)**
- **Ichiki, Yasufumi**
  **Kodaira-shi, Tokyo (JP)**
- **Tanabe, Chishiro**
  **Kodaira-shi, Tokyo (JP)**

(74) Representative: **Godwin, Edgar James et al**
**MARKS & CLERK,**
**57-60 Lincoln's Inn Fields**
**London WC2A 3LS (GB)**

(56) References cited:
**DE-U- 7 411 386** **GB-A- 2 053 783**
**US-A- 2 848 910** **US-A- 5 024 260**

- **PATENT ABSTRACTS OF JAPAN vol. 13, no. 083 (M-802)27 February 1989 & JP-A-63 279 904 ( TOYO TIRE & RUBBER CO.) 17 November 1988**
- **PATENT ABSTRACTS OF JAPAN vol. 14, no. 514 (M-1046)13 November 1990 & JP-A-22 12 204 ( THE YOKOHAMA RUBBER CO. LTD ) 23 AUGUST 1990**
- **PATENT ABSTRACTS OF JAPAN vol. 13, no. 311 (M-851)(3659) 17 July 1989 & JP-A-11 01 205 ( BRIDGESTONE CORP ) 19 APRIL 1989**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 540 340 B1

## Description

The present invention relates to a pneumatic tire having a block pattern, and in particular, a pneumatic tire comprising blocks having sipes and formed in various structures. Further, the present invention relates to a mold for vulcanizing having a particular structure for manufacturing a pneumatic tire having a block pattern, and to a method of manufacturing a pneumatic tire using this mold.

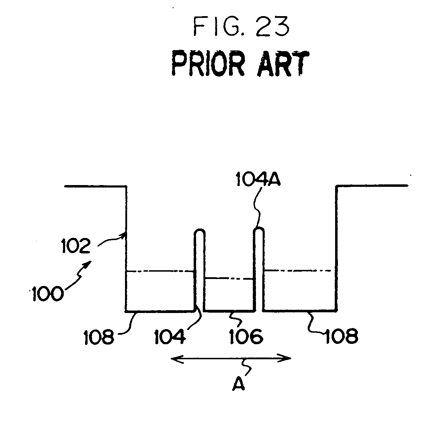

A pneumatic tire which has sipes in blocks so as to improve the running performance of the tire on ice- or snow-covered roads due to the edges of the sipes is known as a studless tire. Studless tires are used on vehicles which run on ice- or snow-covered roads. Fig. 23 is a sectional view cut along a circumferential direction of a conventional block of a studless tire.

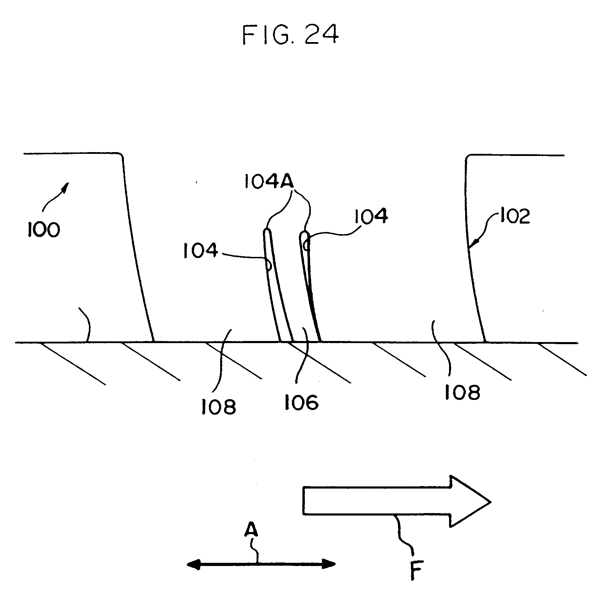

As shown in Fig. 23, a pair of sipes 104, which extend in the transverse direction of a pneumatic tire 100 (the direction orthogonal to the surface of the paper in Fig. 23), is provided in a block 102 in a central portion in the circumferential direction of the tire (the direction of arrow A in Fig. 23). The block 102 is divided by the pair of sipes 104 into a central region 106, which is defined between the sipes 104, and regions 108, which are located respectively at both sides of the central region 106. The width, in the circumferential direction of the tire, of the central region 106 is narrow compared with the width of the region 108. As a result, the narrow central region 106 (hereinafter referred to as the "narrow region") is less rigid than the region 108 (hereinafter referred to as the "wide region"). When the block 102 of the pneumatic tire 100 contacts a road surface and is subject to frictional force from the road surface in a direction tangent to the outer circumference of the tire, as shown in Fig. 24, the narrow region 106, having lower rigidity, is greatly deformed, and one of the sipes of the pair of sipes 104 closes while the other opens. As a result, the narrow region 106 is used as an edge, and the driving performance and braking performance improve as the coefficient of friction on ice increases.

As an example, Japanese Patent Application Laid-Open Nos. 63-279903 and 63-279904, the latter corresponding to the preamble of claim 1, disclose a pneumatic tire having blocks in which the ratio of the width of the narrow region to the width of wide region is less than or equal to 0.8.

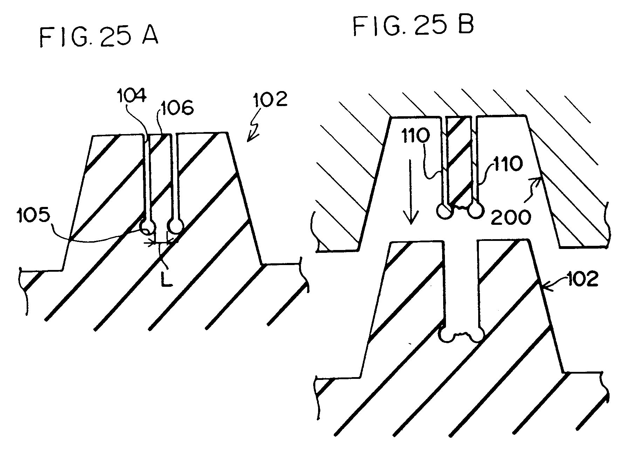

Because the groove width t of the sipe 104 is narrow, when the sipe 104 opens, it is easy for stress to concentrate on the bottom portion 104A of the sipe 104. It is therefore easy for cracks to form from the bottom portion 104A. In order to combat this drawback, forming an enlarged portion, having a circular cross-sectional configuration, at the bottom of a sipe is known. However, as illustrated in Fig. 25A, when two sipes are disposed so as to be adjacent to each other, if the interval L between enlarged portions 105 is too narrow, a drawback arises in that the rubber which should be between the sipes 104, is caught and remains between blades 110 of a vulcanization mold 200 as shown in Fig. 25B. Further, the rigidity of the narrow region 106 between the sipes 104 decreases, and the amount of shearing deformation, when the pneumatic tire is subject to a front-to-back force F during running, increases. As a result, a drawback arises in that it is easy for cracks to form from the bottom portion 105A.

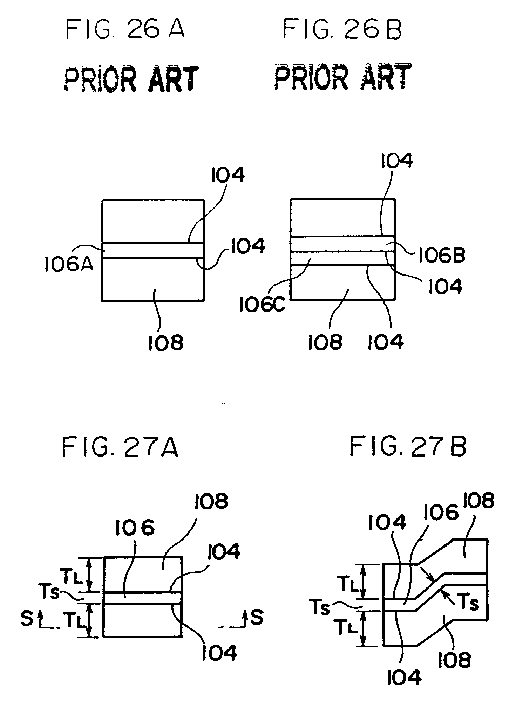

Figs. 26A and 26B are plan views of conventional blocks having at least two sipes. When side force is applied to narrow regions 106A, 106B, 106C due to cornering or the like, distortion due to shearing occurs, and cracks form in the bottoms of the sipes 104. If the cracks worsen, depending on the case, the narrow regions may break off.

There exist a variety of configurations of a plurality of sipes formed in a tire block. In the majority of cases, a pair of sipes is formed so as to be parallel. Examples are illustrated in Figs. 27A and 27B.

However, when a side force during running, such as that described above, acts upon tires having a variety of configurations of blocks having sipes, the bottom portion of the narrow region 106 is deformed by shearing force in the transverse direction. Cracks are generated, and, depending on the case, the narrow region 106 may break off.

When the above-described blocks having sipes are disposed on a pneumatic tire tread such that the narrow regions are arranged in a row along the transverse direction of the tire, another drawback arises in that regions having low rigidity are arranged so as to coincide along the transverse direction of the tire. When a side force is applied to the pneumatic tire, the deformation of the narrow regions is great, cracks form in the narrow regions, and the narrow regions break off.

Usually, concave portions for forming blocks are provided in a vulcanization mold for vulcanizing a block tire. After an unvulcanized green tire is placed in the vulcanization mold, the green tire is pressurized to a predetermined pressure and heated to a predetermined temperature. Due to this process, the rubber of the green tire is pressed tightly into the concave portions so that the outer contour is formed and vulcanization is effected.

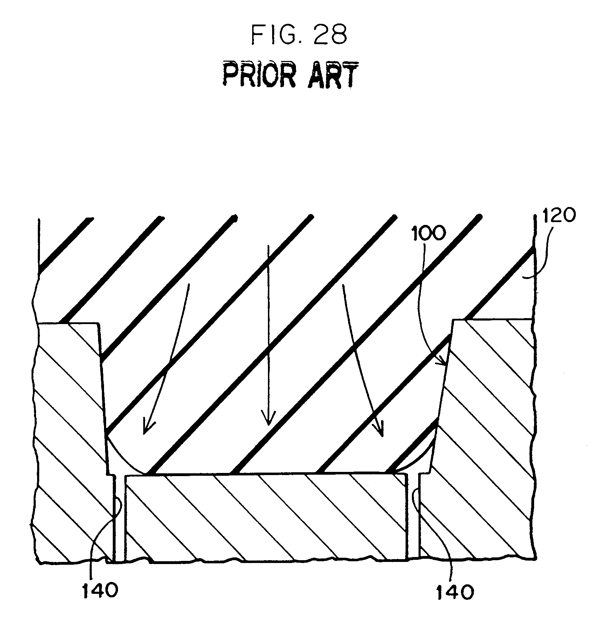

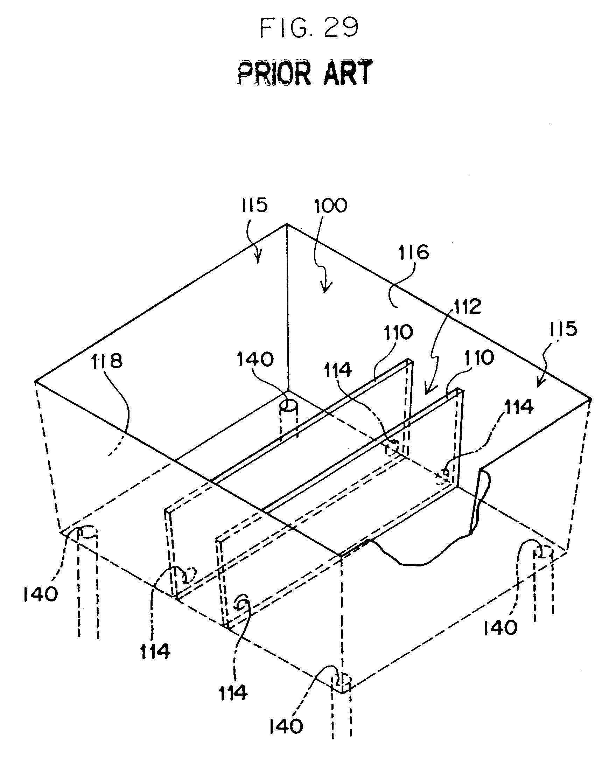

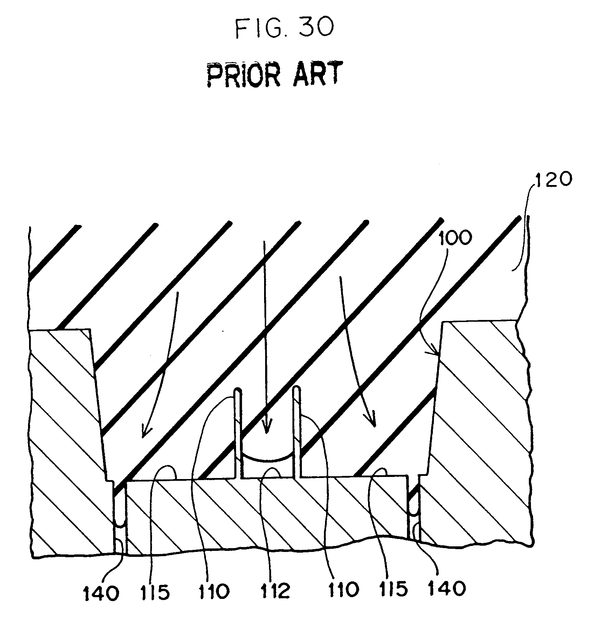

Fig. 28 illustrates a block forming portion of a conventional vulcanization mold with the rubber of a green tire placed therein. When internal pressure is applied to the green tire and rubber 120 of the green tire is forced into the concave portion 100, the concave portion 100 is closed by the rubber 120, and air and gas generated by the rubber stagnate so that the rubber cannot flow. In order to prevent such a situation from occurring, vent holes 140, which communicate with the outside air, are provided in vicinities of the four corners of the concave portion 100 so that the air within the cavities can escape and the rubber 120 can flow more easily. When a pair of sipes is provided so that the block is divided into three regions, as illustrated in Fig. 29, it is necessary to form a pair of thin, plate-shaped blades 110, which extend from one wall surface 116 of the mold to the opposing wall surface 118, within the concave portion 100. The concave portion 100 is divided into three regions by the pair of blades 110 so that a small concave portion 112 is formed between the pair of blades 110. In this case, as shown in Fig. 30, when the rubber 120 of the green tire flows into the concave portion 100, there is no place within the small concave portion 112 for the air to escape so that the small concave portion 112 can be closed by the rubber. Therefore, the rubber does not flow to the bottom portion of the small concave portion 112, and there is a drawback in that bare regions exist in the block after vulcanization. In order to eliminate this drawback, the inventor of the present application attempted a method of forming a pneumatic tire by using a vulcanization mold in which through-holes 114, shown by the chain-dotted lines in Fig. 29, are provided so that the small concave portion 112 and end concave portions 115, which are adjacent to the small concave portion 112, communicate via the through-holes 114. However, this structure did not sufficiently allow the air inside the small concave portion 112 to escape, and consequently did not sufficiently prevent the formation of bare regions.

It would be desirable to be able to provide a pneumatic tire which has blocks with at least one pair of sipes and which can reliably and easily be removed from a mold for vulcanization.

It would also be desirable to be able to provide a pneumatic tire having blocks with at least one pair of sipes in which the generation of cracks at bottom portions of the sipes can be prevented.

It would also be desirable to be able to provide a pneumatic tire having a block pattern capable of preventing the formation of cracks which form in a narrow region defined by a pair of sipes and the breaking off of portions of blocks.

It would also be desirable to be able to provide a mold for vulcanization and a method of manufacturing a pneumatic tire which can prevent the formation of bare regions in a narrow region when the pneumatic tire having blocks with at least one pair of sipes is manufactured.

According to an aspect of the present invention, a pneumatic tire comprises a plurality of blocks, each having a narrow region interposed between a set of two sipes which extend substantially transversely of the tire and wide regions disposed respectively at both sides of the narrow region, beyond the sipes, expanded portions being formed respectively at bottom portions of the sipes, the ratio L/TS of the shortest distance L between the expanded portions to the average length TS of the narrow region in the circumferential direction of the tire satisfying the relationship $0.7 \leq L/TS \leq 1.5$.

By providing the expanded portions at the bottom portions of the sipes, the stress applied to the bottom portions when the sipes open is dispersed, and the formation of cracks from the bottom portions can be prevented. By setting the ratio of the shortest distance L in the circumferential direction of the tire between the expanded portions of the two sipes to the average length TS of the narrow region in the circumferential direction of the tire within the range $0.7 \leq L/TS \leq 1.5$, deterioration of the rigidity of a base portion of the narrow region interposed between the two sipes of the block is suppressed. Therefore, when the pneumatic tire is removed from the vulcanization mold used to form the pneumatic tire, the narrow region is not caught and does not remain between blades of the vulcanization mold which are used to form the sipes. If the ratio L/TS was less than 0.7, the strength of the base portion of the narrow region would deteriorate. Therefore, when the pneumatic tire was removed from the vulcanization mold, the narrow region might be caught by and might remain between the blades which form the sipes. Further, because the rigidity of the narrow region would decrease and shearing deformation due to front-to-back force during running would become large, there would be the fear that cracks might form from the bottom portions of the sipes. On the other hand, if the ratio L/TS was greater than 1.5, the rigidity of the wide regions would decrease, and the inclination of the blades of the vulcanization mold which form the sipes would increase. Therefore, it would become difficult to remove the pneumatic tire from the vulcanization mold.

It is preferable that the relation between the shortest distance L between the enlarged portions and the depth D of the sipe is such that L/D = 0.1 to 0.8. It is even more preferable that L/D = 0.3 to 0.8. If L/D is less than 0.1, the rigidity of the narrow region decreases, and it is difficult to remove the tire from the vulcanization mold. If L/D is greater than 0.8, the narrow region may become too rigid, and there will not be a difference between the rigidities of the regions. The value of L should preferably be at least 1.0 mm, and 2.5 to 5.6 mm is especially preferable. It is preferable that the value of D is 7 to 15 mm.

With regard to the size of the block, in general, the length in the circumferential direction of the tire may be 17 to 40 mm and preferably 20 to 35 mm. The length in the axial direction may be 10 to 80 mm and preferably 15 to 50 mm. When the length in the axial direction is less than 10 mm, the rigidity of the block decreases, and traction on snow deteriorates. In addition, the rigidity of the narrow region decreases, and it is difficult to remove the tire from the vulcanization mold. If the length of the block in the axial direction of the tire is greater than 80 mm, the ground contacting pressure of the block decreases.

It is preferable that the bottom portions of one set of sipes expand in convex shapes in directions away from each other. By forming the enlarged portions in this way, when the tire is removed from the vulcanization mold, the narrow region of the block is smoothly and reliably removed from the mold so that portions do not break off from the narrow region of the block of the manufactured tire.

In the pneumatic tire of the present invention, it is preferable that the ratio W2/W1 of the length W2 of the narrow region in the transverse direction of the tire to the length W1 of each wide region in the transverse direction of the tire is in the range from 0.50 to 0.95. When side force is applied to the tire due to cornering or the like, the shearing force acting on the end portions of the sipes can be greatly reduced by setting W2/W1 within the above-mentioned range. As a result, the number of cracks which form in the bottoms of the sipe end portions can be reduced, and the breaking off of portions of the narrow region can be prevented. When W2/W1 is greater than 0.95, a large shearing force may form in the sipe bottoms when side force is applied to the tire, and the narrow region may easily break off. On the other hand, when W2/W1 is less than 0.5, the coefficient of friction on ice decreases. Therefore, the purpose of providing the two or more sipes is lost.

In the tire of the present invention, it is preferable that the length, in the circumferential direction of the tire, of at least one side end portion of the narrow region is longer than the length, in the circumferential direction of the tire, of a central portion of the narrow region. It is especially preferable that the relation between the length TS1, in the circumferential direction of the tire, of the central portion of the narrow region and the length TS2, in the circumferential direction of the tire, of a side end portion of the narrow region satisfies the condition $1.1 \leqq TS2/TS1 \leqq 3$. If TS2/TS1 is less than 1.1, rigidity of the narrow region in the transverse direction may be insufficient, and cracks may form easily in the end portions of the narrow region. If TS2/TS1 is greater than 3, rigidity of the narrow region in the circumferential direction may be too large. Therefore, the purpose of providing the plurality of sipes is lost, and the on-ice braking performance may be insufficient.

By using the above-described structure, the formation of cracks in the narrow region can be effectively prevented in the following two cases.

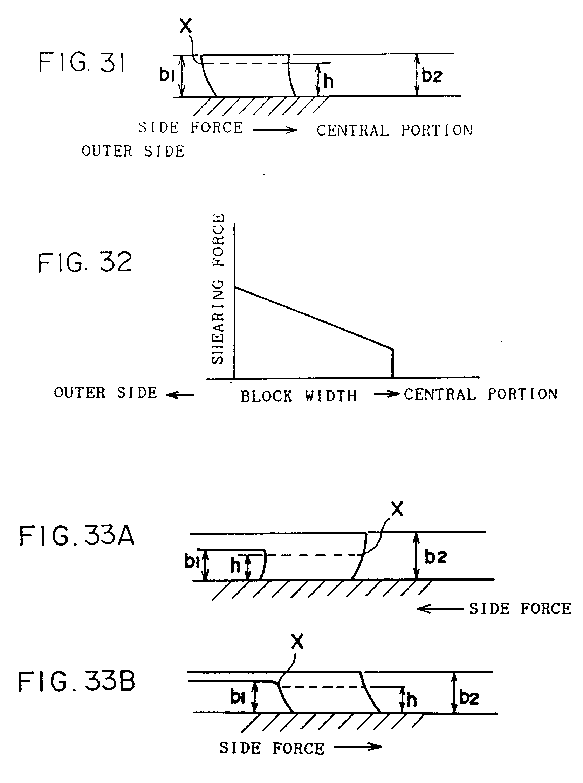

(1) In a case in which the depths of the main grooves adjacent the blocks are equal and the sipes are more shallow than the main grooves: when side force is input to the block while the vehicle is traveling, shearing force in the transverse direction of the block is generated and is concentrated on the end portions of the block. This state is illustrated in Fig. 31 which is a sectional view in the transverse direction of a tire having a block which is contacting the ground. In Fig. 31, "outer side" refers to an outside of the tire tread and "central portion" refers to an inside of the tire tread. Fig. 32 illustrates how the shearing force varies with respect to positions in the transverse direction of the block when side force is input from the outside of the tire tread. As can be understood from this graph, the shearing force gradually decreases as it is directed toward the central portion of the tire tread. At the bottom portion of the narrow region as well (the portion represented by the broken lines), the shearing force concentrates at the end portion X. The length, in the circumferential direction of the tire, of the end portion of the narrow region is made longer than the length, in the circumferential direction of the tire, of the central portion of the narrow region in order to reinforce the portion on which the shearing force concentrates. In this way, the transverse rigidity of the end portion of the narrow region is increased, and deformation of the end portion is controlled. The concentration of stress on this region can thereby be decreased.

(2) In a case in which the depths of the grooves adjacent to the block are different and the sipes are deeper than either of the main grooves: Fig. 33A is a sectional view, in the transverse direction of the tire, of a block which is contacting the ground and illustrates this case. When side force is imparted from the deeper groove b2, the entire block, i.e., the block from the bottom portion of the deeper groove, deforms. Therefore, it is difficult for stress to concentrate on the bottom portion X of the end of the narrow region. On the other hand, if side force is imparted from the more narrow groove b1 as shown in Fig. 33B, stress concentrates on the bottom portion X of the end of the narrow region, and cracks are easily formed. The length, in the circumferential direction of the tire, of the end portion of the narrow region at which the groove is shallow is made larger than the length of the central portion of the narrow region, so that, as in above-described case (1), deformation of the land portion between the sipes can be controlled, and the concentration of stress on this region can be reduced.

In the above-described three preferred aspects of the present invention, each block including a set of sipes has a unique structure. These aspects may be appropriately combined so as to form a variety of pneumatic tires which can meet a variety of needs.

It is preferable that the pneumatic tire of the present invention has a tire block pattern which is structured so that the narrow region of one block is aligned, in the transverse direction of the tire, with a region, which is more rigid than the narrow region, of another block which is adjacent to the one block in the transverse direction of the tire.

By forming this type of block pattern on a tire, even if an extreme frictional force is applied to the tire, the frictional force does not concentrate exclusively on the narrow regions. Therefore, the sipe does not open excessively, and cracks do not form in the bottom of the sipe. Further, even if side force is applied and a complex force, which mainly comprises a component in the transverse direction of the tire, is applied to the narrow region, the deformation of the narrow region is mitigated by the region which is adjacent to and is more rigid than the narrow region. The formation of cracks at, in particular, both end portions of the narrow region can thereby be prevented. Accordingly, using the above-described structure, the formation of cracks in the narrow region can be effectively prevented. Further, the breaking off of the narrow region which results from cracks can be prevented.

In the present invention, it is preferable that the relation between the average length TS in the circumferential direction of the tire of the narrow region of the block interposed between the sipes and the average length TL in the circumferential direction of the tire of each of the wide regions disposed respectively at both sides of the narrow region is such

that $0.1 \leq TS/TL \leq 0.8$. It is particularly preferable that $0.2 \leq TS/TL \leq 0.5$. When the ratio TS/TL is greater than 0.8, the difference between the rigidities of the narrow region and the wide region becomes small. In a new tire or in a tire which has become worn, it is hard for the sipes to open during braking and during driving, and the edge effect may not be obtained. When the ratio TS/TL is less than 0.1, the rigidity of the narrow region may become too low, and the durability of the narrow region may deteriorate. In a new tire or in a tire which has become worn, when the pneumatic tire contacts the ground during driving or braking, the block is subject to frictional force in a direction tangent to the outer circumference of the tire and deforms. However, by setting TS/TL such that $0.1 \leq TS/TL \leq 0.8$, there is a difference in rigidities between the narrow region and the wide regions, and the narrow region deforms more than the wide regions. When the block is subject to frictional force, one of the sipes of the pair of sipes closes, and the other sipe opens. The running performance (driving performance and braking performance) improves due to the edge effect of the corner portion of the tread surface of the narrow region on the side of the sipe which opens.

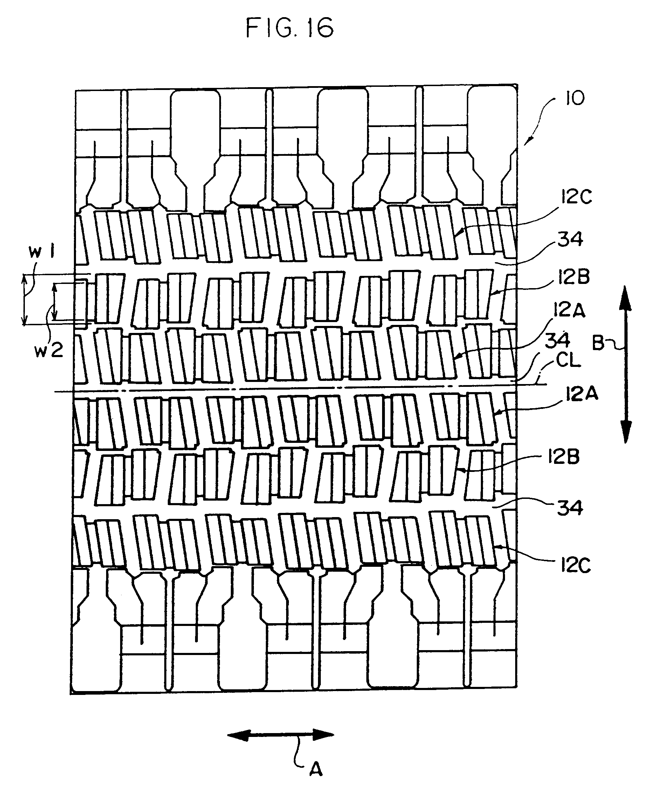

In pneumatic tires having a variety of block structures such as those described above, it is preferable to provide auxiliary sipes respectively in the wide regions in addition to the set of two sipes (main sipes) which divide the block into the narrow region and the wide regions. It is preferable that the auxiliary sipes extend so as to be substantially parallel to the main sipes as illustrated in blocks 12B and 12C of Fig. 16.

When the tire is new, the tread surface is smooth. If the tire is not ridden on to a certain extent, roughness of the surface does not appear. Further, in regard to the sectional configuration of the tread, the shoulder portion is tapered and the angle of the groove is such that the width of the groove becomes wider toward the opening portion. Therefore, the ground contacting surface area when the tire is new is less than that when the tire is worn. When foamed rubber is used in the tread surface portion of the new tire, the tread surface portion which is forced into contact with the mold during vulcanization barely bubbles. Therefore, the roughness of the tire surface is markedly insufficient. The inventor of the present invention has discovered that, in this type of case, the on-ice performance of the tire can be improved by providing auxiliary sipes which extend substantially parallel to the main sipes.

It is preferable that the auxiliary sipe is provided between the main sipe and the edge of the block and that the depth of the auxiliary sipe h2 is 10% to 45% of the depth h1 of the main sipe. By providing the auxiliary sipe, whose depth h2 is 10% to 45% of the depth h1 of the main sipe, substantially parallel to the main sipe, the braking performance, drivability, horizontal-sliding resistance, and cornering on ice-covered and wet roads can be compensated for by the edge effects of the auxiliary sipes until the point when the braking performance, drivability, horizontal-sliding resistance and cornering on ice-covered and wet roads are exhibited 100%. Further, because the depth h2 of the auxiliary sipe is 10% to 45% of the depth h1 of the main sipe, the rigidity of the block is not reduced. Consequently, cracks do not form and portions of the block do not break off. The on-ice performance and wet performance do not deteriorate due to low rigidity of the block. It is especially preferable that the depth h2 of the auxiliary sipe is 25% to 40% of the depth h1 of the main sipe.

If the depth h2 of the auxiliary sipe is less than 10% of the depth h1 of the main sipe, before the edge effect is sufficiently exhibited by the auxiliary sipe, the auxiliary sipe may disappear and the on-ice performance and the wet performance may not be maintained. On the other hand, if the depth h2 of the auxiliary sipe is greater than 45% of the depth h1 of the main sipe, the rigidity of the block decreases markedly. The initially set on-ice performance, wet performance, and controllability deteriorate. Further, there is the fear that cracks may form in the rubber or portions may break off.

Let a be the average of the distance between the auxiliary sipes, or of the distance between the auxiliary sipe and the block edge, or of the distance between the auxiliary sipe and the main sipe. It is preferable that the relation between the average distance a and the depth h2 of the auxiliary sipe is such that $0.5 \leq a/h2 \leq 4$. It is even more preferable that a/h2 is in the range from 1.35 to 2.5. If a/h2 is less than 0.5, the rigidity of the block is reduced excessively, and cracks may form in or portions may break off from the rubber. If a/h2 is greater than 4, little effect is achieved by providing the auxiliary sipes.

If the auxiliary sipes are used in the tire of the present invention, it is preferable that the total length l of the auxiliary sipes projected on the main sipe is greater than or equal to 50% of the length L of one main sipe. It is even more preferable that the auxiliary sipes are provided respectively between the block edges and the main sipes and that the total length l of both of the auxiliary sipes projected on the main sipes is greater than or equal to 100% of the length L of one main sipe. If the total length l of the auxiliary sipes is less than 50% of the length L, the edge effect of the auxiliary sipes may be insufficient.

Further, the configuration of the main sipes and the auxiliary sipes is not limited to straight lines. Zigzag configurations, undulated configurations and the like may be employed.

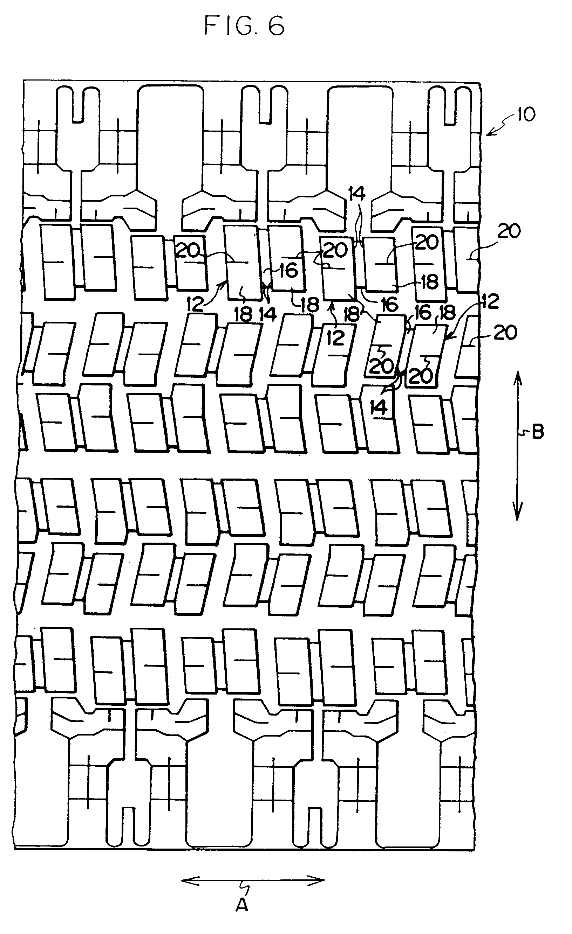

Further, as shown in Fig. 6, circumferential direction sipes, which extend substantially in the circumferential direction of the tire, can be provided in the wide regions. Horizontal slipping on ice-covered or snow-covered roads can effectively be prevented by the circumferential direction sipes. If the average depth of the circumferential direction sipes is h, and the length, in the transverse direction of the tire, of the block portion defined by the circumferential direction sipe and circumferential direction main groove is l, it is preferable that $0.8 \leq l/h \leq 3.0$.

The block portion defined by the circumferential direction sipe and the circumferential direction main groove is the portion interposed, in the axial direction of the tire, between the circumferential direction sipe and the circumferential direction main groove. The length l, in the axial direction of the tire, of this portion is expressed as an average value of the distances, in the axial direction, from the circumferential direction sipes and to the circumferential direction main grooves.

If l/h is less than 0.8, the horizontal rigidity of the block divided by the sipes is reduced, and there may be excessive bending of the narrow region so that the edge effect may not be exhibited. Further, if l/h is greater than 3.0, the horizontal rigidity may become too large and the excessive bending of the narrow region is reduced so that the edge effect may be lost as the edges do not bite into the water membrane. In either of these cases, horizontal sliding may not be prevented. It is even more preferable that $1.0 \leqq l/h \leqq 2.2$.

It is preferable that the average depth h of the circumferential direction sipes is 15% to 75% of the depth H of the circumferential direction main groove, and it is even more preferable that the average depth h is 20% to 60% of the depth H. If the average depth h of the circumferential direction sipes is 15% to 75% of the depth H of the circumferential direction main groove, the rigidity of the block can be maintained, and horizontal sliding can be prevented. If the average depth h of the circumferential direction sipes is less than 15% of the depth H of the circumferential direction main groove, the circumferential direction sipes may not be able to sufficiently prevent horizontal sliding. Further, if the average depth h of the circumferential direction sipes is greater than 75% of the depth H of the circumferential direction main groove, the rigidity of the block decreases, and controllability deteriorates. Further, the movement of the sipes becomes large, and cracks may form in the bottoms of the sipes or portions of the block may break off.

The circumferential direction sipes may be provided in all of the blocks on the tread, or may be provided in the blocks of only one section of the tread, e.g., the shoulder portion.

In the pneumatic tire of the present invention, it is preferable to use foamed rubber as the tread material. In particular, it is preferable that the tread surface portion side of the tread be formed of a foamed rubber having a volume of at least 10% of the entire volume of the tread. It is preferable that the foamed rubber has a foaming ratio of 5% to 50%, independent bubbles of an average bubble diameter of 5 to 150 μm, and hardness in a range of 45° to 75° . By using the preferred foamed rubber, the on-ice performance can be improved and an excellent on-ice performance can be maintained over a long period of time due to the edge effect of the independent bubbles exhibited on the surface of the tread.

If the foamed rubber of the tread surface occupies less than 10% of the entire volume of the tread, the improved effect of the on-ice performance is small. Further, it is desirable that the hardness Hd of the foamed rubber is 45° to 70° . It is preferable that the hardness Hd is 50° to 70° , and it is even more preferable that the hardness Hd is 54° to 70° . When the hardness Hd of the foamed rubber is high, the bubbles do not collapse even under high ground contacting pressure, and on-ice performance improves. The hardness Hd is measured at room temperature according to JIS K6301. When the hardness Hd of the foamed rubber is less than 45° , the wear resistance deteriorates, and tread fatigue is generated. When the hardness Hd is greater than 70° , the tread becomes too hard, workability deteriorates, and there is much heat build-up.

It is desirable that the foaming ratio Vs of the foamed rubber is 5% to 50%, and it is preferable that Vs is 5% to 30%. The foaming ratio Vs of the foamed rubber is expressed as $Vs = (\rho_0/\rho_1 - 1) \times 100(\%)$ , wherein $\rho_1$ is the density (g/cm$^3$) of the foamed rubber and $\rho_0$ is the density (g/cm$^3$) of the solid phase portion of the foamed rubber. If the foaming ratio Vs of the foamed rubber is less than 5%, the foamed rubber is not flexible at low temperatures. If Vs is greater than 50%, wear-resistance deteriorates, and wear-resistance on dry roads may be insufficient in practice.

Further, it is desirable that the average bubble diameter of independent bubbles of the foamed rubber is 5 to 150 μm, and it is preferable that the average bubble diameter is 10 to 100 μm. If the average bubble diameter of the independent bubbles of the foamed rubber is less than 5 μm, the improved effect of the on-ice/on-snow performance is small. If the average diameter is greater than 150 μm, wear-resistance deteriorates greatly, so-called "fatigue-resistance" deteriorates, and deformation of the blocks and dulling of the sipes occur. On-snow performance also deteriorates. Further, cut-resistance deteriorates, which may lead to breaking off of portions of the blocks. It is also difficult to obtain a stable configuration during manufacturing.

The foamed rubber is formed by adding a foaming agent to an ordinary rubber compound in which a certain part per weight of a certain carbon black is used and by applying heat and pressure in accordance with an ordinary method of manufacturing tires. Taking the manufacturability of the tire into account, it is preferable to use, for example, a system in which dinitrosopentamethylenetetraamine is used together with urea, or a benzenesulfonyl hydrazide derivative, in particular, oxy-bis-benzenesulfonyl hydrazide.

Further, natural rubber, polyisopropylene rubber, polybutadiene rubber, butyl rubber, and styrene/butadiene copolymerized rubber having low styrene content are examples of rubber components used in the tread. These components may be used separately, or a mixture of two or more of these polymers may be used. By using these polymers, the tread can have sufficient rubber elasticity at low temperatures.

According to another aspect of the present invention, a mold for vulcanizing a green tire comprises concave portions for forming block portions of a block pattern of a tire, respective pairs of blades for forming pairs of sipes being provided respectively at respective bottom portions of the concave portions so that each bottom portion is divided into an area between the blades and respective areas on both sides of the pair of the blades, and at least one vent hole is provided in the area between the blades.

By using a mold with the above-described structure, when unvulcanized rubber of the pneumatic tire flows into the concave portion for forming the narrow region, the air inside the concave portion escapes through the vent hole. As a result, the flow of the unvulcanized rubber into the concave portion is not impeded. Therefore, the unvulcanized rubber spreads to the corners of the concave portion.

In another aspect the present invention provides a method of manufacturing a pneumatic tire comprising a plurality of blocks, each having a narrow region interposed between a set of two sipes which extend substantially transversely of the tire and wide regions disposed respectively at both sides of the narrow region, beyond the sipes, by using the above-described mold for vulcanizing. Bare regions are not formed in the blocks, and especially not in the narrow regions, of the pneumatic tire formed by this method.

The invention will be described further, by way of example only, with reference to the accompanying drawings, in which:

Fig. 1 is a sectional view of a block of a pneumatic tire of embodiment 1-1 of the present invention, wherein expanded portions are formed respectively at bottoms of sipes.
Fig. 2 is a sectional view of a block of a pneumatic tire of embodiment 1-2 of the present invention, wherein expanded portions are formed respectively at bottoms of sipes.
Fig. 3 is a sectional view of a block of a pneumatic tire of embodiment 1-3 of the present invention, wherein expanded portions are formed respectively at bottoms of sipes.
Fig. 4 is a sectional view of a block of a pneumatic tire of embodiment 1-4 of the present invention, wherein expanded portions are formed respectively at bottoms of sipes.
Fig. 5 is a sectional view of a block of a pneumatic tire of embodiment 2-5 of the present invention, wherein expanded portions are formed respectively at bottoms of sipes.
Fig. 6 illustrates a concrete example of a block pattern of a pneumatic tire of the present invention.

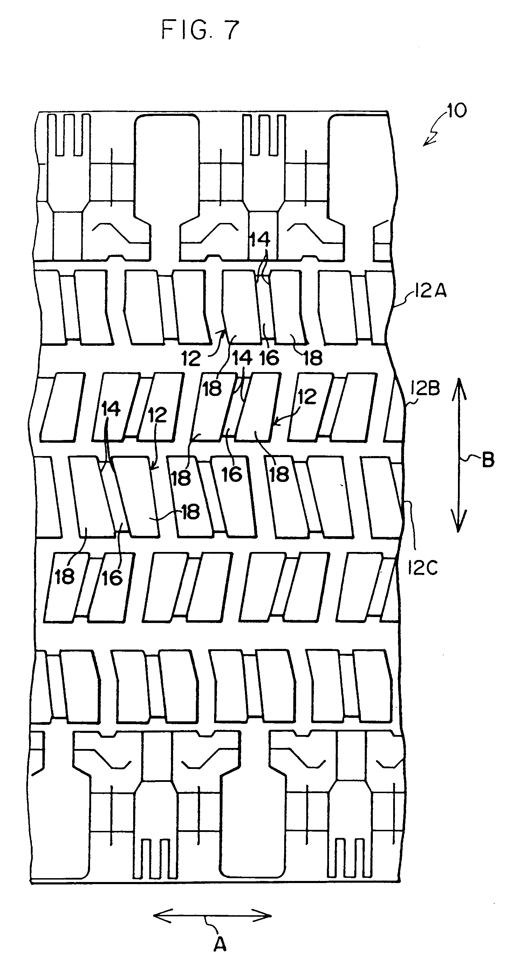

Fig. 7 illustrates another concrete example of a block pattern of a pneumatic tire of the present invention.
Fig. 8 illustrates another concrete example of a block pattern of a pneumatic tire of the present invention.
Fig. 9 is a plan view of a block of a pneumatic tire of the present invention.
Fig. 10 is a sectional view taken along line A-A of Fig. 9.
Fig. 11 is a plan view of a block of a pneumatic tire of the present invention.
Fig. 12A is a plan view of a block of a pneumatic tire of the present invention.
Fig. 12B is a sectional view taken along line B-B of Fig. 12A.
Fig. 13 illustrates a concrete example of a block pattern of a pneumatic tire of the present invention.
Fig. 14 illustrates a concrete example of a tread structure of a pneumatic tire of the present invention.
Fig. 15 is a sectional view illustrating a positional relationship of sipes within the block in Fig. 14 and a cap layer and a base layer.
Fig. 16 illustrates a tread pattern in accordance with the present invention.
Fig. 17 illustrates a mold for vulcanizing a pneumatic tire of embodiment 2-1 of the present invention.
Fig. 18 illustrates a state in which rubber is filled in the mold illustrated in Fig. 17.
Fig. 19 illustrates a mold for vulcanizing a pneumatic tire of embodiment 1-2 of the present invention.
Fig. 20 illustrates a mold for vulcanizing a pneumatic tire of the present invention, wherein only one vent hole is provided in a bottom surface of a concave portion used for forming a narrow region.
Fig. 21 illustrates a block of a pneumatic tire having two sets of sipes.
Fig. 22 illustrates a mold of the present invention for manufacturing a pneumatic tire having the block illustrated in Fig. 21.
Fig. 23 is a sectional view, in a circumferential direction of a tire, of a tire having a conventional block.
Fig. 24 illustrates a state in which a narrow region and wide regions of the tire block illustrated in Fig. 23 are deformed when the tire block is subject to frictional force in a direction tangent to the outer circumference of the tire.
Fig. 25A is a sectional view in the circumferential direction of the tire of a block when enlarged portions are respectively provided at the bottoms of a pair of sipes.
Fig. 25B illustrates a state in which the rubber of the narrow region remains in the mold when the block shown in Fig. 25A is removed from the mold.
Fig. 26A and Fig. 26B are plan views of a block of a conventional pneumatic tire, wherein the block has at least two sipes.
Fig. 27A and Fig. 27B are plan views of a block of a conventional pneumatic tire, wherein the block has one set of two parallel sipes.
Fig. 28 illustrates a state in which crude rubber is filled in a mold for vulcanizing a conventional tire.
Fig. 29 illustrates a conventional mold for forming a block having one set of two sipes.

Fig. 30 illustrates a state in which crude rubber is filled in the mold in Fig. 29.

Fig. 31 is a view illustrating deformation of a block when side force is applied to a tire tread in which depths of main grooves adjacent the block are equal.

Fig. 32 is a graph illustrating the magnitude of a shearing force with respect to positions in the transverse direction of the block.

Fig. 33A and Fig. 33B are views illustrating deformation of a block when side force is applied to a tire tread in which depths of main grooves adjacent the block are different, wherein Fig. 33A illustrates a case in which the side force is applied from the deeper main groove and Fig. 33B illustrates a case in which the side force is applied from the more shallow main groove.

Fig. 34 is a sectional view of an apparatus for vulcanization forming used in a method of manufacturing a pneumatic tire of the present invention.

Fig. 35 is a sectional view of a block of a conventional pneumatic tire.

## DESCRIPTION OF THE PREFERRED EMBODIMENTS

### Embodiment 1-1

Embodiment 1-1 of a pneumatic tire of the present invention will be described hereinafter. In this embodiment, the pneumatic tire has blocks in which expanded portions are formed at the bottom portions of sipes and in which the relationship between the shortest distance L between the expanded portions and the average length TS of a narrow region in the circumferential direction of the tire is such that $0.7 \leqq L/TS \leqq 1.5$.

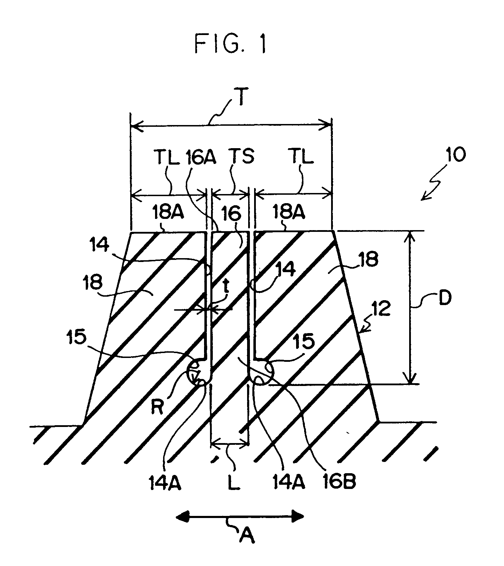

Fig. 1 is a sectional view in the circumferential direction of the tire of a block of the pneumatic tire of the present invention. The block 12 is shaped as a substantially square column.

One set or pair of sipes 14 is formed in the block 12 so as to extend parallel in straight lines along the transverse direction of the tire (the front-to-back direction in Fig. 1).

Both longitudinal end portions of the respective sipes 14 extend to the side walls 12A on the sides of the block 12 in the transverse direction of the tire. The block 12 is divided by the sipes 14 into three regions in the circumferential direction of the tire. The region interposed between the pair of sipes 14 is the narrow region 16. The regions disposed adjacent to the narrow region 16 at both sides of the narrow region 16 in the circumferential direction of the tire (the direction of arrow A in Fig. 1) are the wide regions 18.

The bottom portions 14A of the sipes 14 include expanded portions 15 which are enlarged so that the cross sections thereof in the circumferential direction of the tire are circular. The center of the radius of curvature of the expanded portion 15 is positioned more toward the wide region 18 than the center line of the sipe 14. In the present embodiment, the groove width of the sipe 14 is 0.5 mm, and the radius of curvature R of the expanded portion 15 is 1.5 mm. It is preferable that the radius of curvature R of the expanded portion of the sipe be generally within the range from 0.5 mm to 2 mm.

In the present embodiment, the dimension W of the block 12 in the transverse direction of the tire is 30 mm. The dimension TL of the wide region 18 in the circumferential direction of the tire is 14 mm, and the dimension TS of the narrow region 16 in the circumferential direction of the tire is 5 mm. The ratio TS/TL is approximately 0.36. The dimension T in the circumferential direction of the tire of the block 12 is not limited to these values, but it is preferable that T is set so that $15 \text{ mm} \leqq T \leqq 40 \text{ mm}$, and it is more preferable that $20 \text{ mm} \leqq T \leqq 35 \text{ mm}$. When the dimension T of the block 12 in the circumferential direction of the tire exceeds 40 mm, the ground contacting pressure of the block 12 decreases as the length of the block 12 in the circumferential direction of the tire increases. Therefore, undesirable effects may result as it becomes difficult to obtain the edge effect, and driving performance and braking performance deteriorate. On the other hand, when the dimension T in the circumferential direction of the tire is less than 15 mm, the rigidity of the block 12 may become too small. This case as well may result in undesirable effects as it becomes difficult to obtain the edge effect, and driving performance and braking performance deteriorate.

It is preferable that the width of the sipe groove is less than or equal to 1 mm. It is especially preferable that the width of the sipe groove is less than or equal to 0.6 mm.

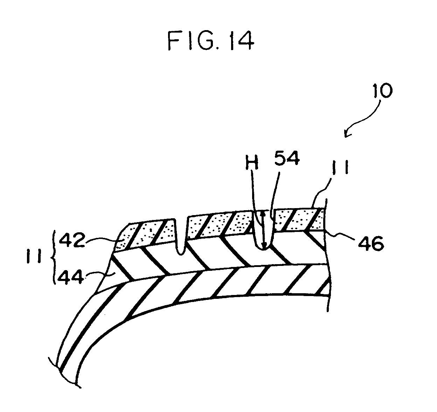

Fig. 14 illustrates a concrete example of a tread portion of a pneumatic tire of the present invention. Fig. 14 is a sectional view of a shoulder portion of the tread in the transverse direction of the tire. A tread 11 is formed of two types of rubber such that there are two layers in the direction of thickness of the tread 11. A foamed rubber having independent bubbles is used for the cap side, i.e., an upper layer 42 (the layer on the road surface side), which contacts the road surface. An ordinary rubber, which has low exothermic character and which is not foamed, is used for the base side, i.e., a lower layer 44.

In the present embodiment, the ratio of the volume which the foamed rubber of the upper layer 42 occupies, to the entire volume of the tread 11, is 26%. A boundary surface 46 of the upper layer 42 and the lower layer 44 is set at approximately the middle of the depth of a main groove 54 which is formed in the circumferential direction of the tire. In the present embodiment, the foaming ratio Vs of the foamed rubber of the upper layer 42 is 18%, the average bubble diameter is 25 μm, and the hardness is 64° . The hardness of the rubber of the lower layer 44 is 62° .

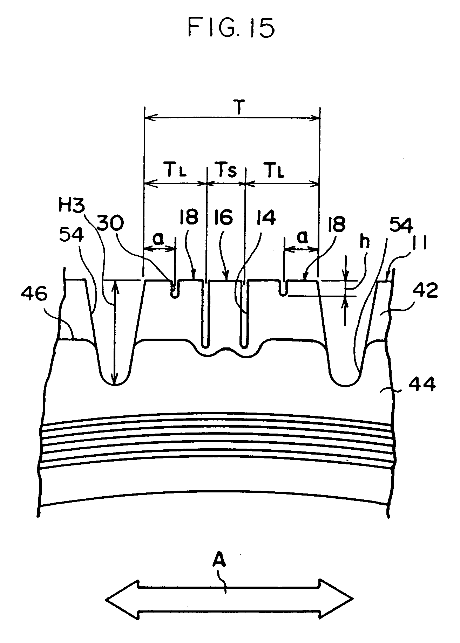

Fig. 15 is a sectional view, in the circumferential direction of the tire, of the block 12 shown in Fig. 14. Fig. 15 illustrates the arrangement of the sipes within the block 12. As can be seen in the drawing, the sipes 14 are formed in the cap layer 42, and it is preferable that the bottoms of the sipes exist in a vicinity of the boundary between the cap layer 42 and the base layer 44. The tread structure is not limited to the structure illustrated in Figs. 14 and 15, and a variety of materials and structures may be used.

Embodiment 1-2

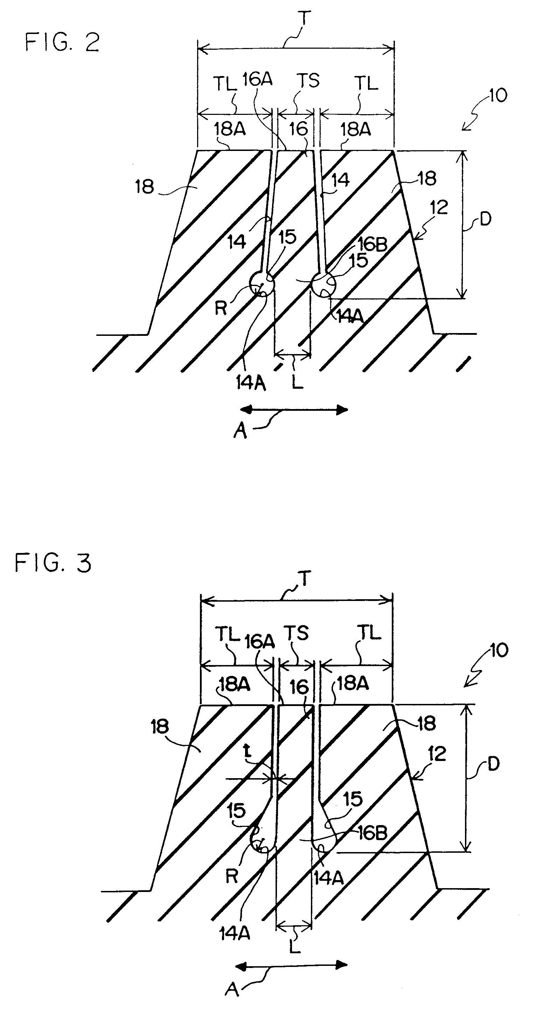

Referring to Fig. 2, embodiment 1-2 of the present invention will be described. Parts which are the same as those of embodiment 1-1 are denoted by the same reference numerals, and description thereof is omitted.

Fig. 2 is a sectional view, in the circumferential direction of the tire, of the block of the pneumatic tire of the present invention. Fig. 2 illustrates a variation of embodiment 1-1.

As the sipes 14 the present embodiment extend toward their respective bottom portions 14A, the sipes 14 are inclined in directions away from each other. The bottom portions of the sipes are expanded in circular shapes whose centers are on the center lines of the grooves of the sipes. These expanded portions 15 extend in the transverse direction of the tire (towards the rear in Fig. 2). In this example, the shortest distance L between the expanded portions is 5 mm, TS is 5 mm, and the ratio L/TS is 1.0.

In this example as well, the ratio L/TS is within the scope of the present invention. Therefore, when the tire is removed from the mold, the narrow region 16 does not remain in the vulcanization mold. Further, during braking and the like, with the tire of the present embodiment, even when the sipe 14 opens and the edge effect occurs, the stress applied to the bottom portion 14A is dispersed by the expanded portion 15. Therefore, cracks can effectively be prevented from forming from the bottom portions 14A.

Embodiment 1-3

Next, embodiment 1-3 of the present invention will be described in accordance with Fig. 3, which is a sectional view, in the circumferential direction of the tire, of a block. Parts which are the same as those of embodiment 1-1 are denoted by the same reference numerals, and description thereof is omitted.

The pair of sipes 14 in the present embodiment are provided so as to be parallel. The expanded portions 15 are formed so as to swell in substantial tear-drop shapes toward the respective wide regions 18.

In the present embodiment, the shortest distance L between the bottom portions 14A of the pair of sipes 14 is 5 mm, and the dimension TS of the narrow region 16 is 5 mm. The ratio L/TS is 1. Therefore, there is no weakening of the portion 16B at which the narrow region 16 is rooted to the block 12, and the narrow region 16 does not remain in the vulcanization mold. Further, the expanded portions 15 are formed in substantial tear-drop shapes. Therefore, compared with the pneumatic tires of embodiments 1-1 and 1-2, the pneumatic tire equipped with this block is more easily removed from blades (unillustrated) of the vulcanization mold which form the expanded portions 15. In the same way as embodiments 1-1 and 1-2, because stress, which is applied to the bottom portion 14A when the sipe 14 opens, is dispersed by the expanded portion 15, the formation of cracks in the root portion 16B can be effectively prevented.

Embodiment 1-4

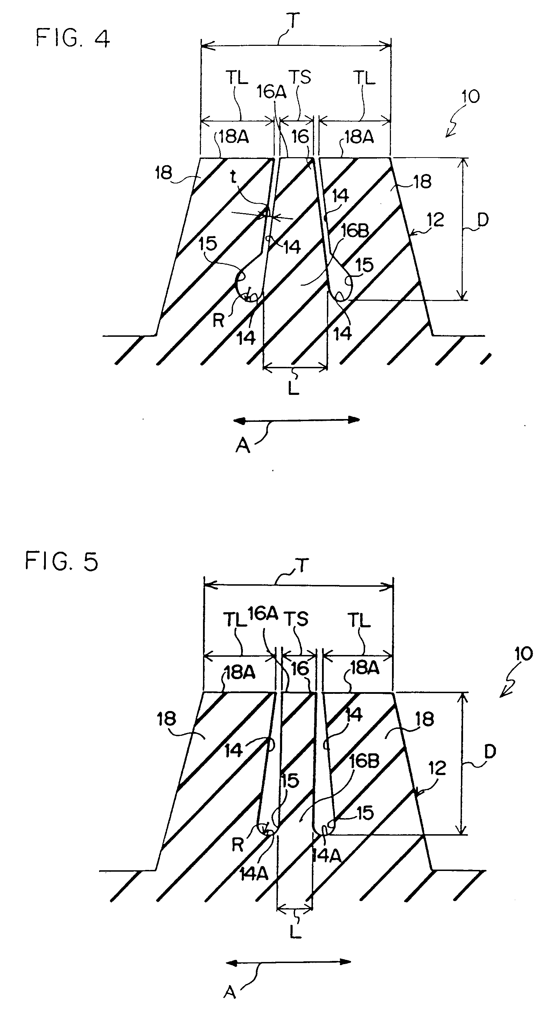

Next, embodiment 1-4 of the present invention will be described in accordance with Fig. 4, which is a sectional view, in the circumferential direction of the tire, of a block of the tire. Parts which are the same as those of embodiment 1-1 are denoted by the same reference numerals, and description thereof is omitted.

In the present embodiment, as the sipes 14 extend toward their respective bottom portions 14A, the sipes 14 are inclined in directions away from each other. The bottom portions 14A swell in substantial tear-drop shapes toward the wide regions 18 so as to form the expanded portions 15.

In the present embodiment, the shortest dimension L between the bottom portions 14A of the pair of sipes 14 is 7.5 mm, and the dimension TS of the narrow region 16 is 5 mm. The ratio L/TS is 1.5. As a result, as in the above-described embodiment, there is no weakening of the portion 16B at which the narrow region 16 is rooted to the block 12, and the narrow region 16 can be easily removed from the vulcanization mold and does not remain therein. Further, because stress, which is applied to the bottom portion 14A when the sipe 14 opens, is dispersed by the expanded portion 15, cracks can be effectively prevented from forming from the bottom portion 14A.

Embodiment 1-5

Next embodiment 1-5 of the present invention will be described in accordance with Fig. 5, which is a sectional view of a block of the tire. Parts which are the same as those of embodiment 1-1 are denoted by the same reference numerals, and description thereof is omitted.

In the present embodiment, as the sipes 14 extend toward their respective bottom portions 14A, the sipes 14 are inclined in directions away from each other. Further, the groove widths of the sipes 14 gradually widen as the sipes 14 extend toward the bottom portions 14A. The bottom portions 14A of the expanded portions 15 are formed as semicircles. The shortest dimension L between the bottom portions 14A of the pair of sipes 14 is 5 mm, and the dimension TS of the narrow region 16 is 5 mm. The ratio L/TS is 1.0.

In the present embodiment as well, the ratio L/TS of the shortest dimension L between the bottom portions 14A of the pair of sipes 14 to the width TS of the narrow region 16 is set so that $0.7 \leq L/TS \leq 1.5$. Therefore, the advantages obtained in above-described embodiments 1-1 to 1-4 are also obtained in the present embodiment.

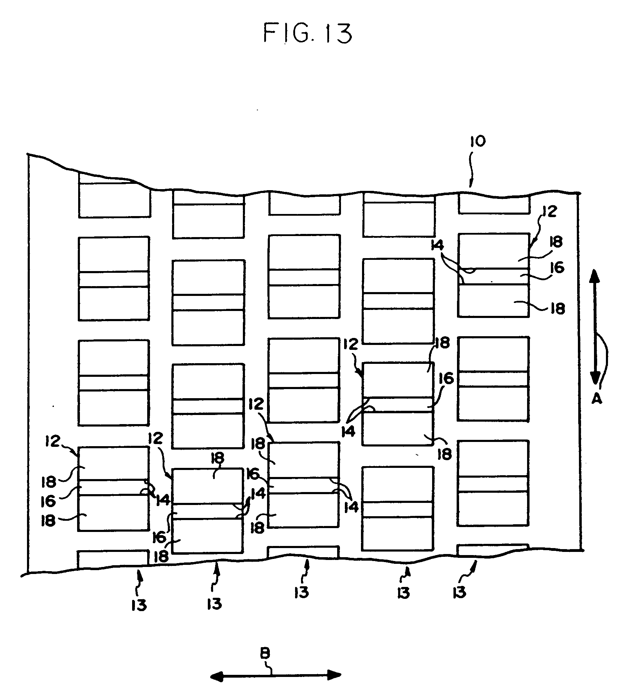

Further, in embodiments 1-1 to 1-5, the block 12 is rectangular as seen from above the tread. However, the present invention is not limited to the same. Another concrete example of a tread pattern of the pneumatic tire of the present invention is illustrated in Fig. 13. In the tread, five block rows 13, each of which is formed of a plurality of the blocks 12, are provided along the transverse direction of the tire (the direction of arrow B in Fig. 13). The blocks 12 of each block row 13 are disposed so as to be spaced apart at predetermined intervals along the circumferential direction of the tire (the direction of arrow A in Fig. 13). The block is provided with sipes 14 with expanded portions such as those of embodiment 1-1.

As illustrated in Fig. 13, the block row 13, having blocks with the above dimensions, is staggered by a predetermined dimension in the circumferential direction of the tire with respect to the block rows 13 adjacent thereto. The narrow regions 16 of the blocks of one block row 13 are disposed so as to be aligned, in the transverse direction of the tire, with the wide regions 18 of the blocks of the adjacent rows 13. In this way, the narrow regions 16 and the wide regions 18, which are more rigid than the narrow regions 16, are disposed alternately in the transverse direction of the tire. Therefore, even when an extreme frictional force is applied to the tire, the force is not concentrated exclusively on the narrow regions 16. As a result, the sipes 14 do not open excessively, and cracks do not form in the bottom portions 14A thereof. Further, even if a side force F is applied to the block and a complex force, which is comprised mainly of a horizontal direction component, is applied to the narrow region 16, the amount of deformation is mitigated and decreased by the rigid wide regions 18. The formation of cracks particularly in both end portions of the narrow region 16 can thereby be prevented. In this way, the formation of cracks in the narrow region 16 and the breaking off of portions due to cracks can be effectively prevented by the present invention.

Fig. 16 illustrates another embodiment of the present invention. The block of the pneumatic tire has expanded portions such as those of embodiment 1-1. In the block 12 illustrated in Fig. 16, the ratio of the length W2 of the narrow region in the transverse direction of the tire to the length W1 of the wide region in the transverse direction of the tire is 0.92. In block 12B, the ratio W2/W1 is 0.85. In block 12C, the ratio W2/W1 is 0.92. By setting W2/W1 such that $0.5 \leq W2/W1 \leq 0.95$, when side force is applied to the tire due to cornering or the like, the shearing force applied to the end portions of the sipes can be greatly reduced. As a result, the formation of cracks at the bottoms of the sipe end portions can be prevented.

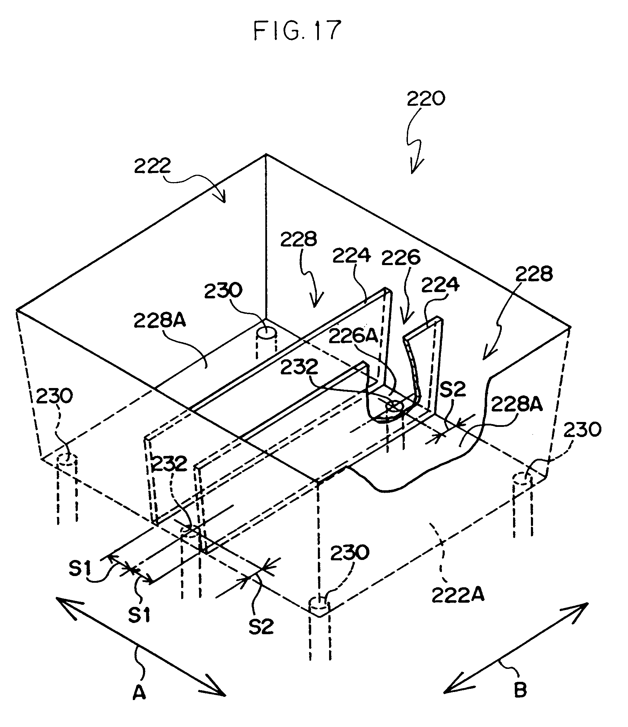

Further, in Fig. 16, the narrow regions 16 of the blocks of one block row are disposed so as to be aligned, in the transverse direction of the tire (the direction of arrow A in Fig. 17), with the wide regions 18 of the blocks of adjacent block rows. By using this arrangement, even if a side force is applied, the deformation of the narrow regions will be mitigated by the wide regions 18, which are more rigid than the narrow regions 16, of the adjacent blocks. The formation of cracks at both end portions of the narrow region 16 can thereby be prevented.

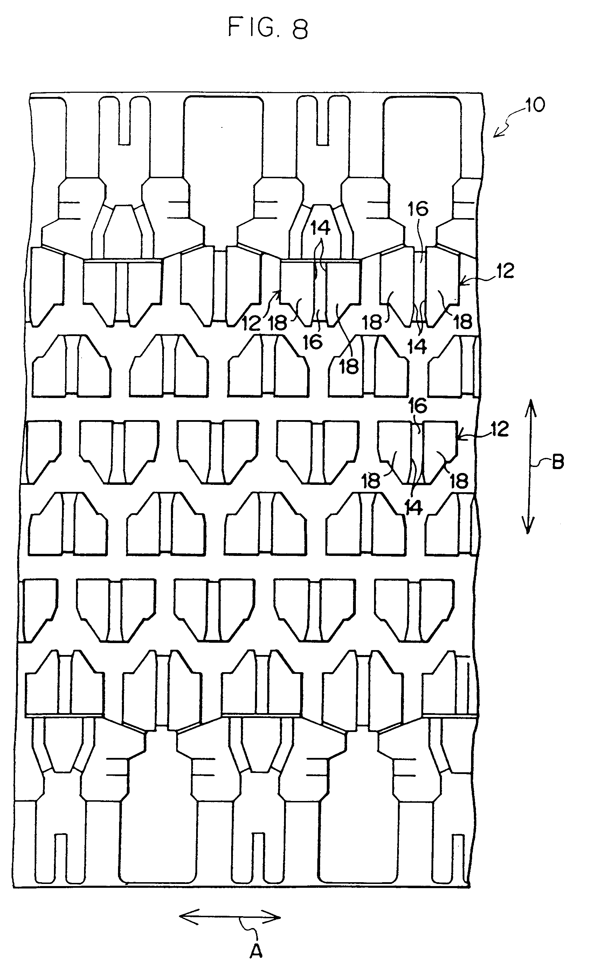

As shown in Fig. 8, the block 12 may have a trapezoidal configuration. However, the planar configuration of the block 12 is not limited to this shape.

In each of the above-described embodiments, one set of a pair of sipes is provided per block. However, the present invention is not limited to the same, and two or more sets of the pairs of sipes may be provided in each block.

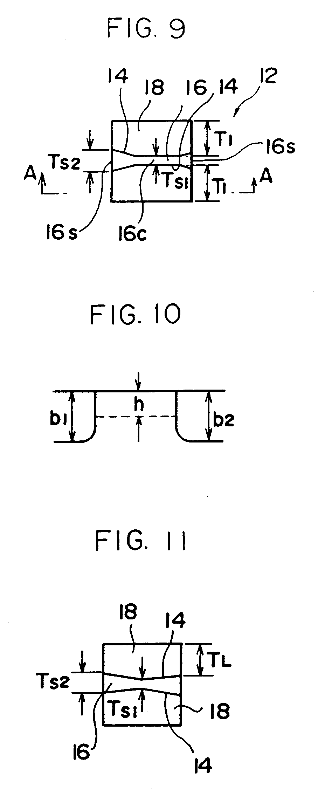

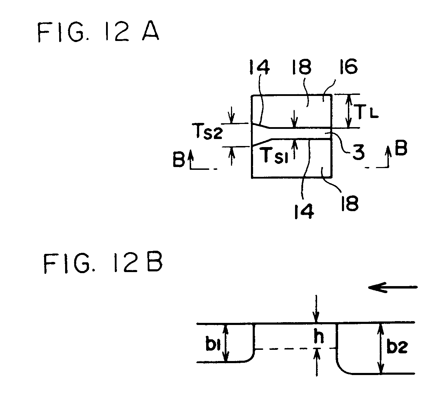

In the present embodiment, the configurations illustrated in Figs. 9, 11 and 12 can be used for the planar configuration of the block. Therefore, by making a length, in the circumferential direction of the tire, of at least one side end portion of the narrow region longer than a length, in the circumferential direction of the tire, of a central portion of the narrow region, cracks can be effectively prevented from forming in the narrow region. Fig. 10 is a sectional view taken along line A-A of Fig. 9, and Fig. 12B is a sectional view taken along line B-B of Fig. 12A. Fig. 10 and Fig. 12B respectively illustrate cases in which the depths of a main groove and an auxiliary groove are the same ($b1 = b2$) and in which the depths are different ($b1 \neq b2$).

In the pneumatic tire of the present invention including blocks which have expanded portions at the bottoms of the sipes, auxiliary sipes 30, which extend in the circumferential direction of the tire, can be formed in the wide regions as shown in Fig. 6. Further, as shown in Fig. 16, the auxiliary sipes 30 can be formed in the wide regions so as to be substantially parallel to the main sipes 14.

A tire equipped with blocks having the specific structures shown in the above-described embodiments can be easily manufactured by using molds in which blades corresponding to the above sipe structures are formed.

Experimental Example

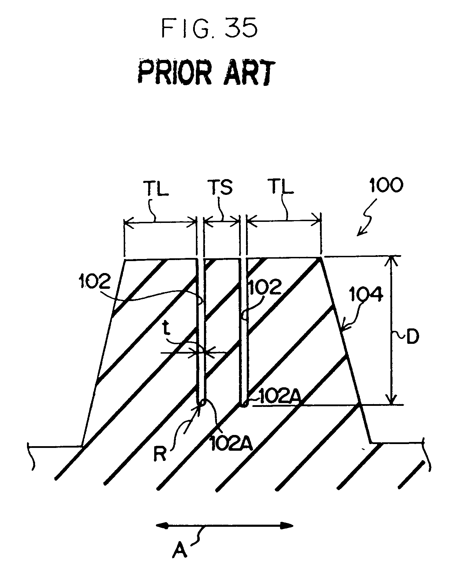

Table 1 shows the results of an experiment performed using six tires: conventional tire A (a pneumatic tire having blocks of the shape shown in Fig. 35), comparison tire B (a pneumatic tire having blocks of the shape shown in Fig. 25A), tire A of the present invention (a pneumatic tire having blocks of the shape shown in Fig. 2 of embodiment 1-2), tire B of the present invention (a pneumatic tire having blocks of the shape shown in Fig. 2 of embodiment 1-2), tire C of the present invention (a pneumatic tire having blocks of the shape shown in Fig. 1 of embodiment 1-1), and comparison tire (a pneumatic tire having blocks of the shape shown in Fig. 2). Tires of these six types were filled to standard internal pressure and were placed on all of the driving wheels of six respective ten-ton trucks having constant loads. These ten-ton trucks were actually driven, and the distance driven until a crack formed in the bottom portion of a sipe was measured. The results of this experiment are given in Table 1. The size of all of the tires used in the experiment was 10.00R20. Six-hundred and twenty four (624) caramel-shaped blocks, which were identically shaped except for the structures of the sipes which differed for each type of tire, were provided on each tire.

Further, when the pneumatic tires used in Table 1 were removed from vulcanization molds, the number of rubber pieces left between the blades, which are provided in the vulcanization mold and which are used to form the sipes, and the proportion of rubber pieces left were calculated. The results of these calculations are shown in Table 2.

TABLE 1

| | TL (mm) | TS (mm) | Depth of Sipe (mm) | Width of Sipe (mm) | Sipe Bottom Radius R (mm) | L (mm) | L/TS (mm) | Distance Run until Crack Appears (km) |
|---|---|---|---|---|---|---|---|---|
| Conventional Tire A | 14 | 5 | 10 | 0.5 | 0.25 | 5 | 1.0 | 5000 |
| Comparison Tire B | 14 | 5 | 10 | 0.5 | 1.5 | 2.5 | 0.5 | 18000 |
| Tire A of the Present Invention | 14 | 5 | 10 | 0.5 | 1.5 | 3.5 | 0.7 | No cracks |
| Tire B of the Present Invention | 14 | 5 | 10 | 0.5 | 1.5 | 7.5 | 1.5 | No cracks |
| Tire C of the Present Invention | 14 | 5 | 10 | 0.5 | 1.5 | 5 | 1.0 | No cracks |
| Comparison Tire | 14 | 5 | 10 | 0.5 | 1.5 | 8.5 | 1.7 | 7000 |

TABLE 2

| | Total Number of Blocks per Tire | Number of Pieces of Rubber Left in Mold | Proportion of Pieces of Rubber Left in Mold (%) |
|---|---|---|---|
| Conventional Tire A | 624 | 0 | 0 |
| Comparison Tire B | 624 | 18 | 2.9 |
| Tire A of the Present Invention | 624 | 0 | 0 |
| Tire B of the Present Invention | 624 | 0 | 0 |
| Tire C of the Present Invention | 624 | 0 | 0 |
| Comparison Tire | 624 | 0 | 0 |

It can be understood from the experimental results shown in Table 1 that in the pneumatic tire of the present invention, the formation of cracks from the bottom portions of the sipes can be prevented. Table 2 shows that when the pneumatic tire of the present invention is removed from a vulcanization mold, the narrow region does not remain in the vulcanization mold and can be removed reliably and smoothly therefrom.

Embodiment 2-1

A vulcanization mold used for manufacturing the pneumatic tire of the present invention will be described. Fig. 17 is a perspective view of a mold for vulcanization which is used in the present invention to form the pneumatic tire 10. As shown in Fig. 17, concave portions 222, which are shaped as substantial square columns and are used for forming the blocks 12, are provided in a forming surface of a mold 220. Blades 224, which are used to form the sipes 14, are provided in the concave portions 222. The blades 224 are formed as a pair of thin plates which extend parallel to each other along the transverse direction of the tire (the direction of arrow B in Fig. 17). As a result, the concave portion 222 is divided into three regions by the pair of blades 224. A concave portion 226 is provided between the pair of blades 224, and concave portions 228 are provided respectively at outer sides of the pair of blades 224. The concave portion 226 is a section for forming the narrow region, and the concave portions 228 are sections for forming the wide regions.

Vent holes 230 are provided in bottom surfaces 228A of the wide region forming concave portions 228 in the vicinities of corner portions of a bottom surface 222A of the concave portion 222. These vent holes 230 communicate with the air outside the mold 220. The vent holes 230 are formed so as to have circular cross sections. It is preferable that the total sectional area of the vent holes 230 per one wide region forming concave portion 228 is at least 1 $mm^2$. It is more preferable that the total sectional area of the vent holes 230 per one wide region forming concave portion 228 is greater than or equal to one percent of the surface area of the bottom surface 228A of one wide region forming concave portion 228, i.e., the surface area of the tread surface 18A of one wide region 18 of the block 12.

Vent holes 232 are provided in the bottom surface 226A of the narrow region forming concave portion 226 at vicinities of both end portions in the transverse direction of the tire (the direction of arrow B). The vent holes 232 communicate with the air outside the mold 220. In the present embodiment, the vent holes 232 are formed so as to have circular cross-sectional configurations wherein the diameter d of the hole is 1.2 mm. Further, the distance S2 from the position of the vent hole 232 to the edge portion of the bottom surface 226A in the transverse direction of the tire is 3 mm. The vent hole 232 is positioned mid-way between the blades 224 (the distance S1 from the vent hole 232 to the blade 224 is 3 mm). It is preferable that the total sectional area of the vent holes 232 per one narrow region forming concave portion 226 is greater than or equal to 1 $mm^2$. It is more preferable that the total sectional area of the vent holes 232 per one narrow region forming concave portion 226 is greater than or equal to one percent of the surface area of the bottom surface 226A of one narrow region forming concave portion 226, i.e., the surface area of the tread surface of one narrow region 16 of the block 12. If two or more vent holes 232 are provided, it is preferable that they be spaced apart from each other as far as possible.

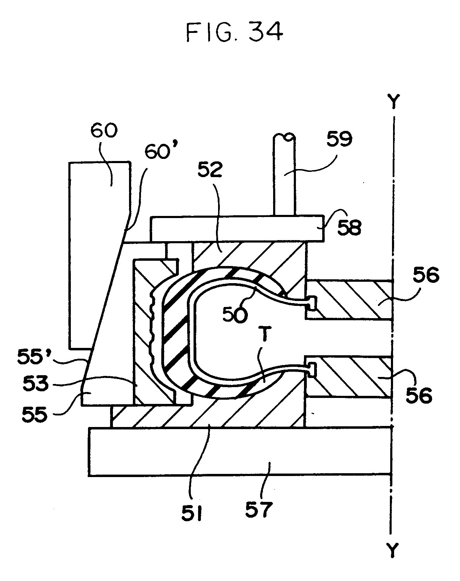

Next, a method of manufacturing the pneumatic tire of the present invention will be described. Fig. 34 is a sectional view of principal parts of an apparatus for vulcanizing a green tire. The apparatus is equipped with a mold of the present invention having the structure illustrated in Fig. 17. The apparatus is comprised mainly of molds 51 and 52, which support the side portions of the tire, a mold 53, which supports the tread side of the tire and forms a predetermined block pattern, and a machine stand base 56 which fixes an expandable vulcanizing bag 50. The molds 51 and 52 are fixed respectively to lower platen 57 and upper platen 58. The mold 53 is divided into a plurality of parts which are respectively attached to segments 55 into which the green tire T is divided in the circumferential direction. A plurality of concave portions structured such as those shown in Fig. 17 are provided in the inside surface of the mold 53 so as to form a predetermined tread pattern. The upper platen 58 is attached to a piston rod 59 of a fluid cylinder so that the mold 52 moves vertically along with the vertical motion of the piston rod 59. An outer ring 60 has an inclined surface 60′ which can move vertically. The outer ring 60 contacts and engages with respective inclined surfaces 55′ of the segments 55. In this device, first, when the upper side mold 52 is at its upper standby position, the green tire is inserted into and maintained in the vulcanizing bag 50. Next, the piston rod 59 is lowered, and the upper side mold 52 is made to contact the green tire. Then, the outer ring 60 is lowered, and the mold 53 is pushed against the green tire by the segments 55 being moved horizontally towards the central axis Y-Y of the vulcanization forming device. Accordingly the tread pattern is formed, and as the vulcanization of the green tire progresses, the pneumatic tire is formed.

The vulcanization forming apparatus used in the method of the present invention is not limited to that illustrated in Fig. 34. The pneumatic tire of the present invention can be manufactured using any of a variety of vulcanization forming apparatuses.

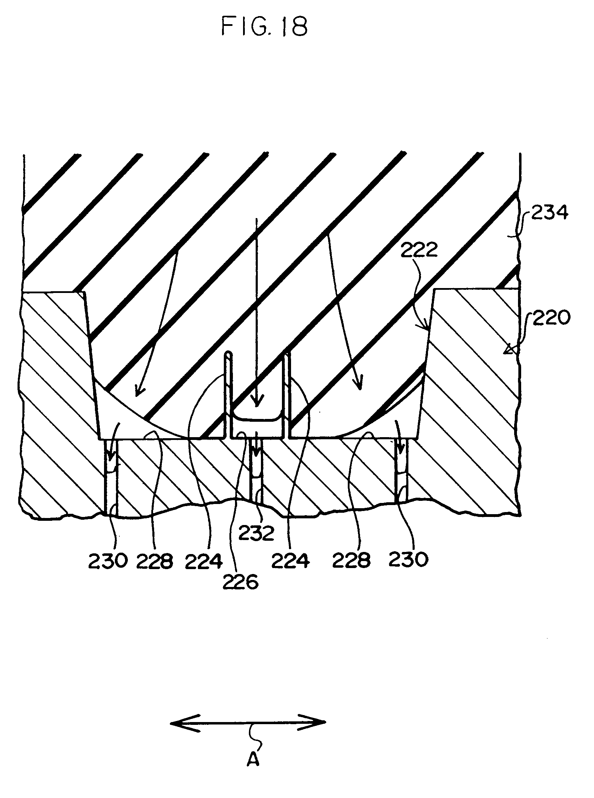

In accordance with the method of the present invention, an unvulcanized green tire is placed in the mold 20 of the present invention illustrated in Fig. 17. Next, the interior of the unvulcanized green tire is pressurized by an unillustrated bladder which is disposed within the green tire. Fig. 18 illustrates a state in which the green tire is inserted in the mold. In the drawing, the rubber 234 of the green tire is inserted in the concave portion 222. The air in the concave portion 222 is pushed out to the outside air through the vent holes 230 and the vent holes 232. The rubber 234 of the green tire reaches the corners of the bottom surface 226A of the narrow region forming concave portion 226 and the corners of the bottom surfaces 228A of the wide region forming concave portions 228, and can be tightly pressed against the inner surfaces of the mold. Thereafter, the green tire within the mold 220 for vulcanization is vulcanized for a predetermined period of time at a predetermined temperature. Accordingly, bare regions are not formed in the blocks 12 of the pneumatic tire 10 formed by the method of manufacturing a pneumatic tire of the present invention.

Embodiment 2-2

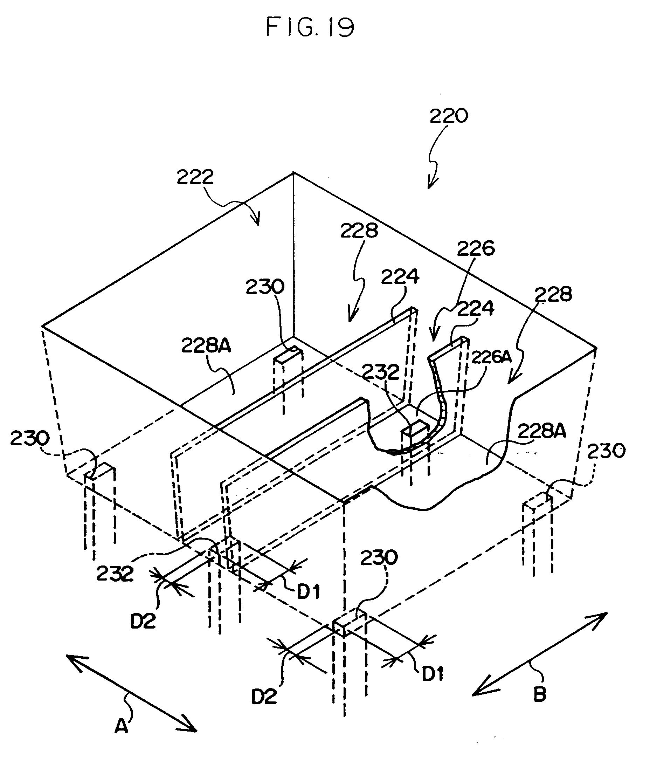

In the previous embodiment, the cross-sectional configurations of the vent holes 230 and the vent holes 232 are circular. However, the present invention is not limited to the same. Another vulcanization mold of the present invention is illustrated in Fig. 19. In the present embodiment, the cross-sectional configurations of the vent holes 230 and the vent holes 232 are rectangular. The dimension D1 of the respective vent holes 230, 232 in the transverse direction of the tire (the direction of arrow B in Fig. 19) is 1 mm, the dimension D2 thereof in the circumferential direction of the tire (the direction of arrow A in Fig. 19) is 0.5 mm. In other respects, the mold of the present embodiment is the same as that of embodiment 2-1.

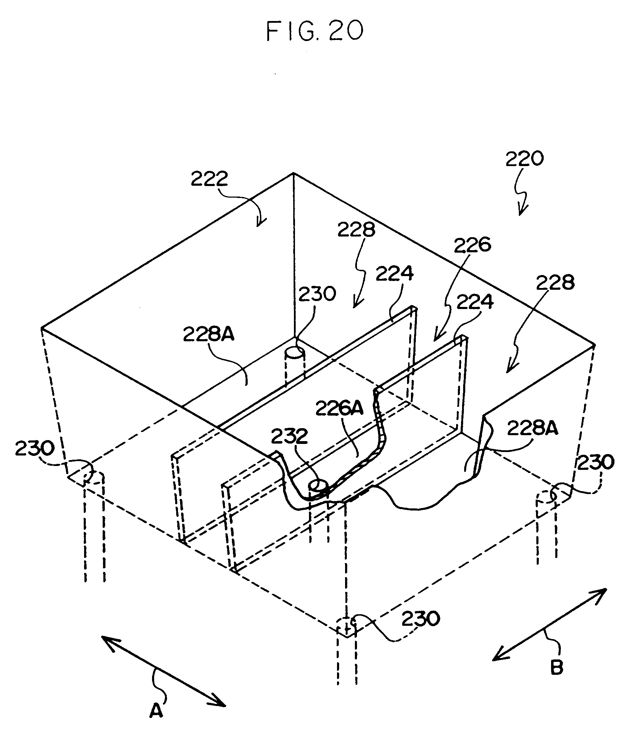

In the above-described embodiment, two vent holes 232 are provided in the bottom surface 226A of the narrow region forming concave portion 226. However, it suffices to provide one vent hole 232 in the narrow region forming portion 226. Fig. 20 illustrates an example of a mold in which one vent hole 232 is provided in the center of the bottom surface 226A.

Embodiment 2-3

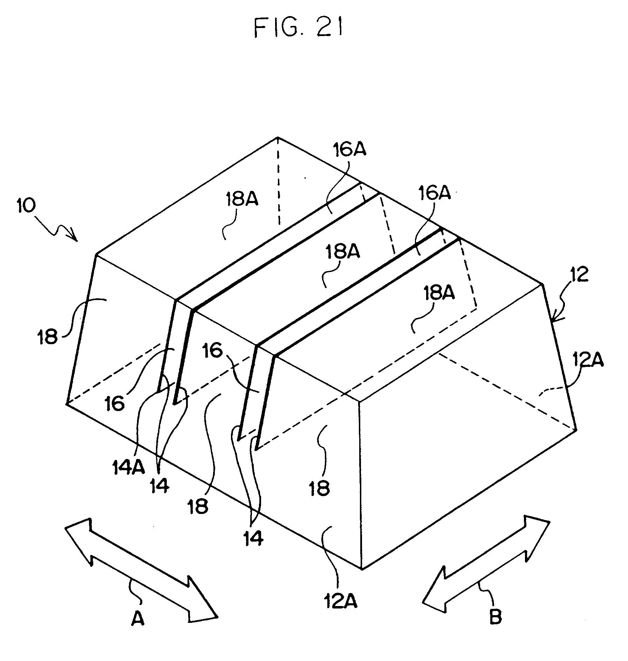

A vulcanization forming mold for manufacturing a pneumatic tire having blocks in which two sets of pairs of sipes 14 are provided, as shown in Fig. 21, will be described. Parts which are the same as those of embodiment 2-1 are denoted by the same reference numerals, and description thereof is omitted.

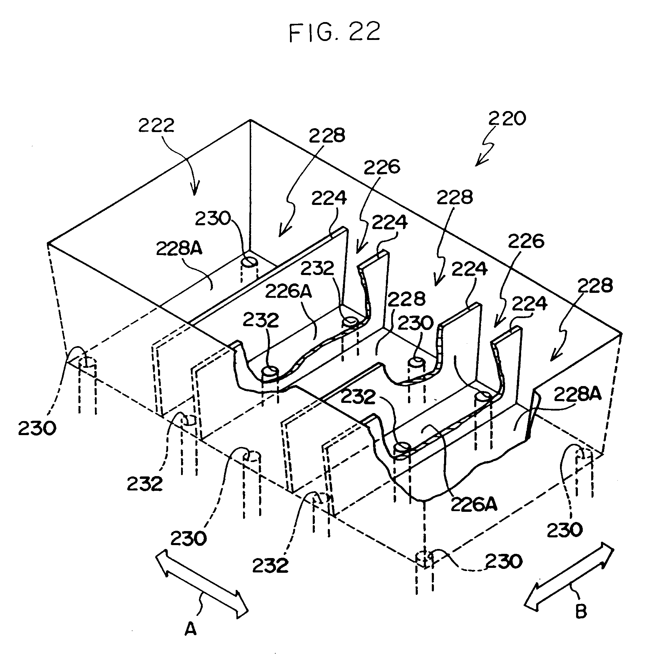

As shown in Fig. 22, two sets of pairs of blades 224 are provided in the concave portion 222 for forming a block. The vent holes 232 are provided in vicinities of both end portions in the transverse direction of the tire (the direction of arrow B in Fig. 22) and in central portions of the bottom surfaces 226A of each narrow region forming concave portion 226 which is interposed between the pair of blades 224. In the present embodiment, the diameter of the vent hole 232 is set to 1 mm.

Further, the vent holes 230 are provided in vicinities of end portions in the transverse direction of the tire of the bottom portion 228A of the wide region forming concave portion 228 which is provided in the center of the concave portion 222 in the circumferential direction of the tire (the direction of arrow A in Fig. 22).

In the present embodiment as well, when the rubber 34 of the green tire flows into the concave portion 222, the air inside the concave portion 222 is pushed out to the outside air through the vent holes 230 and the vent holes 232. The rubber 34 of the green tire reaches the corners of the bottom surfaces 226A of the narrow region forming concave portions 226 and the corners of the bottom surfaces 228A of the wide region forming concave portions 228. The rubber 34 of the green tire can thereby be fit tightly against the inside surfaces of the mold. Accordingly, bare regions are not formed in the blocks 12 of the pneumatic tire 10 of the present embodiment.

In the above-described embodiments, one or two sets of pairs of sipes are provided per block by the mold. However, the present invention is not limited to the same; the mold may be formed so that three or more sets of pairs of sipes are be provided per block.

At least one vent hole 232 may be provided in the narrow region forming concave portion 226, and a plurality of the vent holes 232 may be provided as occasion demands.

Although the configuration of the vent holes 230, 232 is not specified in particular, in order for air to escape therethrough, it is preferable that the configuration of the vent holes 230, 232 is as simple as possible (e.g., circular, rectangular, and the like).

Further, in the present embodiment the blades for forming the pair of sipes are parallel. However, in the present invention, it is not absolutely necessary that the blades are parallel. In addition, the heights and the configurations of the blades are not limited. The shapes of the concave portions of the mold which are used for forming the blocks are not limited to those used in the embodiments, and a variety of configurations may be used.

It is to be noted that the sipe-forming blades are illustrated only diagrammatically and means for forming expanded bottom portions of the sipes are not illustrated. However, it will be appreciated that suitable means of circular or teardrop cross-section can be provided on the blades, or the thickness of the blades may be expanded, in order to form such expanded sipe portions.

Experimental Example

An experiment was performed with five molds for vulcanization each having different characteristics (existence of vent holes, number of vent holes, size of vent holes, size of ground contacting surface area of narrow region). Green tires were respectively vulcanized in the molds. The blocks on the pneumatic tires formed by the vulcanization molds were inspected to determine whether bare regions had formed in the blocks, and the bare regions which were formed were measured by observation. The results of this experiment are given in Table 3. The size of the bare region of the conventional tire is given as an index number of 100. Smaller numbers are more preferable.

TABLE 3

| | Comparative Example | Present Invention 1 | Present Invention 2 | Present Invention 3 | Conventional Example |
|---|---|---|---|---|---|
| Number of vent holes in narrow region forming concave portion | 1 | 1 | 1 | 2 | 0 |
| Sectional area of vent hole ($mm^2$) | 0.5 | 1.1 | 1.1 | 1.1 ×2 | - |
| Ground contacting surface area of narrow region ($mm^2$) | 90 | 90 | 180 | 180 | 90 |
| Existence of bare regions | Yes | No | Yes | No | Yes |
| Size of bare regions (index number) | 50 | - | 20 | - | 100 |

As can be understood from the experimental results given in Table 3, when a pneumatic tire is manufactured using the mold for vulcanizing of the present invention, the formation of bare regions in the narrow region can be controlled.

## Claims

1. A pneumatic tire comprising a plurality of blocks (12), each having a narrow region (16) interposed between a set of two sipes (14) which extend substantially transversely of the tire and wide regions (18) disposed respectively at both sides of the narrow region (16), beyond the sipes (14), characterized in that:
   expanded portions (15) are formed respectively at bottom portions (14A) of the sipes (14) and the ratio L/TS of the shortest distance L between the expanded portions (15) to the average length TS of the narrow region (16) in the circumferential direction of the tire satisfies the relationship $0.7 \leqq L/TS \leqq 1.5$.

2. A pneumatic tire according to claim 1, wherein the bottom portions (14A) of the sipes (14) are expanded in convex shapes in directions away from each other.

3. A pneumatic tire according to claim 1 or 2, wherein the ratio W2/W1 of the length W2 of the narrow region (16) in the transverse direction of the tire to the length W1 of each wide region (18) in the transverse direction of the tire satisfies the relationship $0.50 \leqq W2/W1 \leqq 0.95$.

4. A pneumatic tire according to any preceding claim, wherein the length (TS2), in the circumferential direction of the tire, of at least one side end portion of the narrow region (16) is longer than the length (TS1), in the circumferential direction of the tire, of a central portion of the narrow region (16).

5. A pneumatic tire according to any preceding claim, comprising a tire block pattern structured so that the narrow region (16) of a first block (12) is aligned, in the transverse direction of the tire, with a region, which is more rigid than the narrow region (16), of a second block which is adjacent to the first block in the transverse direction of the tire.

6. A pneumatic tire according to any preceding claim, including blocks having at least one auxiliary sipe (30) in each of the wide regions (18).

7. A pneumatic tire according to claim 6, wherein the auxiliary sipe (30) is substantially parallel to the set of sipes (14).

8. A pneumatic tire according to any preceding claim, including blocks having at least one sipe (20) which is formed along the circumferential direction of the tire in each of the wide regions (18).

9. A mold for vulcanizing a green tire, comprising concave portions (222) for forming block portions (12) of a block pattern of a tire, respective pairs of blades (224) for forming pairs of sipes (14) being provided respectively at respective bottom portions (222A) of the concave portions (222) so that each bottom portion (222A) is divided into an area between the blades (224) and respective areas on both sides of the pair of blades (224), characterized in that:
at least one vent hole (232) is provided in the area between the blades (224).

10. A method of manufacturing a pneumatic tire comprising a plurality of blocks, each having a narrow region (16) interposed between a set of two sipes (14) which extend substantially transversely of the tire and wide regions (18) disposed respectively at both sides of the narrow region (16), beyond the sipes (14), characterized in that:
a green tire is vulcanized by using a mold equipped with concave portions (222) for forming block portions (12) of a block pattern of a tire, each concave portion (222) having at a bottom portion (222A) thereof, a pair of blades (224) for forming a pair of sipes (14) so that the bottom portion (222A) of the concave portion (222) is divided into an area (226) between the blades (224) and respective areas (228) on both sides of the pair of blades (224), the bottom portion (226A) having in the area (226) between the blades (224) at least one vent hole (232).

**Patentansprüche**

1. Luftreifen mit mehreren Blöcken (12), die jeweils einen schmalen Bereich (16), der sich zwischen einer Gruppe von zwei sich im wesentlichen quer zum Reifen erstreckenden Lamellen (14) befindet, und breite Bereiche (18) aufweisen, die jeweils zu beiden Seiten des schmalen Bereichs (16) jenseits der Lamellen (14) angeordnet sind, dadurch **gekennzeichnet,** daß
an unteren Abschnitten (14A) der Lamellen (14) jeweils ausgeweitete Abschnitte (15) ausgebildet sind, und daß das Verhältnis L/TS zwischen dem kürzesten Abstand L zwischen den ausgeweiteten Abschnitten (15) und der durchschnittlichen Länge TS des schmalen Bereichs (16) in der Umfangsrichtung des Reifens die Beziehung $0,7 \leqq L/TS \leqq 1,5$ erfüllt.

2. Luftreifen nach Anspruch 1, wobei die unteren Abschnitte (14A) der Lamellen (14) in konvexen Formen voneinander weg gerichtet ausgeweitet sind.

3. Luftreifen nach Anspruch 1 oder 2, wobei das Verhältnis W2/W1 zwischen der Länge W2 des schmalen Bereichs (16) in der Querrichtung des Reifens und der Länge W1 eines jeden breiten Bereichs (18) in der Querrichtung des Reifens die Beziehung $0,50 \leqq W2/W1 \leqq 0,95$ erfüllt.

4. Luftreifen nach einem der obenstehenden Ansprüche, wobei die Länge (TS2) zumindest eines seitlichen Endabschnitts des schmalen Bereichs (16) in der Umfangsrichtung des Reifens länger ist als die Länge (TS1) eines mittleren Abschnitts des schmalen Bereichs (16) in der Umfangsrichtung des Reifens.

5. Luftreifen nach einem der obenstehenden Ansprüche, mit einem Reifenblockmuster, das derart gestaltet ist, daß der schmale Bereich (16) eines ersten Blocks (12) in der Querrichtung des Reifens mit einem Bereich, der steifer ist als der schmale Bereich (16), eines zweiten Blocks ausgerichtet ist, der dem ersten Block in der Querrichtung des Reifens benachbart liegt.

6. Luftreifen nach einem der obenstehenden Ansprüche, mit Blöken, die wenigstens eine Hilfslamelle (30) in jedem der breiten Bereiche (18) aufweisen.

7. Luftreifen nach Anspruch 6, wobei die Hilfslamelle (30) im wesentlichen parallel zu der Gruppe von Lamellen (14) ist.

8. Luftreifen nach einem der obenstehenden Ansprüche, mit Blöcken, die wenigstens eine Lamelle (20) aufweisen, die entlang der Umfangsrichtung des Reifens in jedem der breiten Bereiche (18) ausgebildet ist.

9. Form zum Vulkanisieren eines Grünreifens mit konkaven Abschnitten (222) zum Formen von Blockabschnitten (12) eines Blockmusters eines Reifens, jeweiligen Paaren von Klingen (224) zum Formen von Paaren von Lamellen (14), die jeweils an jeweiligen unteren Abschnitten (222A) der konkaven Abschnitte (222) derart vorgesehen sind, daß ein jeder unterer Abschnitt (222A) in einen Bereich zwischen den Klingen (224) und jeweiligen Bereichen zu beiden Seiten des Paares von Klingen (224) aufgeteilt ist, dadurch **gekennzeichnet,** daß: wenigstens ein Lüftungsloch (232) in dem Bereich zwischen den Klingen (224) vorgesehen ist.

**10.** Verfahren zum Herstellen eines Luftreifens mit mehreren Blöcken, die jeweils einen schmalen Bereich (16), der zwischen einer Gruppe von zwei sich im wesentlichen quer zu dem Reifen erstreckenden Lamellen (14) angeordnet ist, und breite Bereiche (18) aufweisen, die jeweils zu beiden Seiten des schmalen Bereichs (16) jenseits der Lamellen (14) angeordnet sind, dadurch **gekennzeichnet,** daß:
ein Grünreifen unter Verwendung einer Form vulkanisiert wird, die mit konkaven Abschnitten (222) zum Formen von Blockabschnitten (12) eines Blockmusters eines Reifens ausgestattet ist, wobei jeder konkave Abschnitt (222) an einem unteren Abschnitt (222A) ein Paar Klingen (224) zum Formen eines Paares von Lamellen (14) derart aufweist, daß der untere Abschnitt (222A) des konkaven Abschnitts (222) in einen Bereich (226) zwischen den Klingen (224) und jeweiligen Bereichen (228) zu beiden Seiten des Paares von Klingen (224) aufgeteilt ist, und wobei der untere Abschnitt (226A) in dem Bereich (226) zwischen den Klingen (224) wenigstens ein Lüftungsloch (232) aufweist.

## Revendications

**1.** Pneumatique comprenant plusieurs blocs (12) ayant chacun une région (16) étroite interposée entre un jeu de deux rainures (14) qui s'étendent essentiellement transversalement par rapport au pneumatique, et des régions larges (18) disposées respectivement des deux côtés de la région étroite (16), au-delà des rainures (14), caractérisé en ce que des portions élargies (15) sont formées respectivement à l'emplacement de portions de fond (14A) des rainures (14) et en ce que le rapport L/TS de la distance L la plus courte entre les portions élargies (15) à la longueur moyenne TS de la région étroite (16), dans la direction circonférentielle du pneumatique,satisfait à la relation $0,7 \leqq L/TS \leqq 1,5$.

**2.** Pneumatique selon la revendication 1 dans lequel les portions de fond (14A) des rainures (14) sont élargies suivant des formes convexes dans des sens opposées l'un à l'autre.

**3.** Pneumatique selon la revendication 1 ou 2 dans lequel le rapport W2/W1 de la longueur W2 de la région étroite (16) dans la direction transversale du pneumatique par rapport à la longueur W1 de chaque région large (18) dans la direction transversale du pneumatique satisfait à la relation $0,50 \leqq W2/W1 \leqq 0,95$.

**4.** Pneumatique selon l'une quelconque des revendications précédentes dans lequel dans la direction circonférentielle du pneumatique, la longueur (TS2) d'au moins une portion d'extrémité latérale de la région étroite (16) est plus longue que la longueur (TS1) d'une portion centrale de la région étroite (16), dans la direction circonférentielle du pneumatique.

**5.** Pneumatique selon l'une quelconque des revendications précédentes, comprenant un motif de blocs de pneumatique structuré de telle sorte que la région étroite (16) d'un premier bloc (12) est alignée, dans la direction transversale du pneumatique, avec une région qui est plus rigide que la région étroite (16), d'un second bloc qui est adjacent au premier bloc dans la direction transversale du pneumatique.

**6.** Pneumatique selon l'une quelconque des revendications précédentes comprenant des blocs ayant au moins une rainure auxiliaire (30) dans chacune des régions larges (18).

**7.** Pneumatique selon la revendication 6 dans lequel la rainure auxiliaire (30) est essentiellement parallèle par rapport au jeu de rainures (14).

**8.** Pneumatique selon l'une quelconque des revendications précédentes comprenant des blocs ayant au moins une rainure (20) qui est formée le long de la direction circonférentielle du pneumatique dans chacune des régions larges (18).

**9.** Moule pour la vulcanisation d'un pneumatique vert, comprenant des portions concaves (222) pour former des portions de bloc (12) d'un motif de blocs de pneumatique, respectivement des paires de lamelles (224), pour former des paires de rainures (14), étant réalisées à l'emplacement de portions de fond respectives (222A) des portions concaves (222) de telle façon que chaque portion de fond (222A) est divisée en une surface située entre les lamelles (224), et respectivement des surfaces situées sur les deux côtés de la paire de lamelles (224), caractérisé en ce qu'au moins un trou d'évent (232) est réalisé dans la surface située entre les lamelles (224).

**10.** Procédé de fabrication d'un pneumatique comprenant plusieurs blocs ayant chacun une région étroite (16) interposée entre un jeu de deux rainures (14) qui s'étendent essentiellement transversalement par rapport au pneumatique, et des régions larges (18) disposées respectivement sur les deux côtés de la région étroite (16), au-delà des rainures (14), caractérisé en ce qu'on vulcanise un pneumatique vert en utilisant un moule équipé de portions concaves (222) pour former des portions de bloc (12) d'un motif de blocs de pneumatique, chaque portion concave (222) ayant à l'emplacement d'une portion de fond (222A) de celle-ci, une paire de lamelles (224) pour former une paire de rainures (14) de telle façon que la portion de fond (222A) de la portion concave (222) est divisée en une surface (226) située entre les lamelles (224) et respectivement des surfaces (228) situées sur les deux côtés de la paire de lamelles (224), la portion de fond (226A) ayant au moins un trou d'évent (232) dans la surface (226) située entre les lamelles (224).

FIG. 1

T
TL
16A
TS
TL
10
18A
16
18A
14
18
14
18
t
D
12
15
15
R
14A
L
14A
16B
A

FIG. 2

T
TL
16A
TS
TL
18A
16
18A
10
18
14
18
12
D
14
15
16B
15
R
14A
14A
L
A

FIG. 3

T
TL
16A
TS
TL
18A
16
18A
10
18
18
t
12
D
15
15
16B
R
14A
14A
L
A

FIG. 4

T
TL
TS
TL
16A
10
18A
16
18A
18
t
18
14
12
D
14
16B
15
15
R
14
14
L
A

FIG. 5

T
TL
16A
TS
TL
10
18A
16
18A
18
14
18
14
D
16B
15
12
15
R
14A
14A
L
A

FIG. 6

10
14
20
20
20
20
16
20
18
12
18
14
18
12
18
16
16
18
12
20
20
20
14
B
A

FIG. 7

10
14
12A
12
14
16
18
18
12B
14
12
12
B
14
12
18
16
18
18
18
12C
18
16
A

FIG. 8

10
16
14
12
12
18
18
18
16
14
18
16
12
B
18
18
14
A

FIG. 9

14
18
16
14
12
T1
16s
Ts2
A
Ts1
T1
A
16s
16c

FIG. 10

h
b1
b2

FIG. 11

18
14
TL
Ts2
Ts1
18
16
14

FIG. 12 A

14
18
16
TL
Ts2
B
Ts1
3
B
14
18

FIG. 12 B

b1
h
b2

FIG. 13

10
12
18
16
18
14
12
18
16
14
18
12
12
12
18
16
18
14
18
16
14
18
16
18
16
14
18
13
13
13
13
13
A
B

FIG. 14

10
H
54
11
42
11
44
46

FIG. 15

T
TL
Ts
TL
H3
30
54
18
16
14
a
a
18
h
54
11
46
42
44
A

FIG. 16

10
12C
34
12B
12A
34
B
CL
12A
12B
34
12C
W1
W2
A

FIG. 17

220
222
228
224
226
224
228
230
228A
226A
232
230
S2
228A
230
232
S1
S1
230
S2
222A
A
B

FIG. 18

234
222
220
232
230 228 224
226
224 228 230

A

FIG. 19

220
222
228
226
224
230
224
228
228A
226A
232
230
228A
230
232
230
D1
D2
D1
D2
A
B

FIG. 20

222
220
228
226
224
230
224
228
228A
226A
232
228A
230
230
230
A
B

FIG. 21

16A
18A
10
16A
18A
12
18A
18
16
12A
16
14A
14
18
18
14
12A
A
B

FIG. 22

222
228
220
226
224
228
230
224
228A
226
232
224
226A
228
228
224
232
230
232
228A
230
232
226A
230
230
232
230
A
B

FIG. 23
**PRIOR ART**

104A
102
100
108
104
106
108
A

FIG. 24

104A
100
104
104
102
108
106
108
A
F

FIG. 25 A
104
106
102
105
L
FIG. 25 B
110
110
200
102

FIG. 26A
PRIOR ART

FIG. 26B
PRIOR ART

104
104
106A
108
104
106B
104
106C
108
104

FIG. 27A

108
106
104
TL
Ts
S
TL
S
104

FIG. 27B

104
106
108
TL
Ts
Ts
TL
108
104

FIG. 28
PRIOR ART

120
100
140
140

FIG. 29
PRIOR ART

115
100
116
112
110
115
118
140
114
110
114
140
114
140
114
140

FIG. 30

PRIOR ART

120
100
140
115
110
112
110
115
140

FIG. 31

X
b1
h
b2
SIDE FORCE
CENTRAL PORTION
OUTER SIDE

FIG. 32

SHEARING FORCE
OUTER SIDE
BLOCK WIDTH
CENTRAL PORTION

FIG. 33A

FIG. 33B

X
b1
h
b2
SIDE FORCE
X
b1
h
b2
SIDE FORCE

FIG. 34

Y
60
60'
59
52
58
56
50
T
55'
53
55
56
51
57
Y

FIG. 35
PRIOR ART

TL
TS
TL
100
102
102
104
t
D
102A
R
102A
A